# EUROPEAN PATENT SPECIFICATION

(11) **EP 1 227 887 B1**
(45) Date of publication and mention of the grant of the patent: **18.01.2006**
(21) Application number: 00969571.9
(22) Date of filing: 26.10.2000
(51) Int. Cl.: B01L 3/02, B01L 3/00

(54) **DEVICE AND RELATED METHOD FOR DELIVERING SMALL VOLUMES OF LIQUID**
VORRICHTUNG UND VERFAHREN ZUR ABGABE VON KLEINEN FLÜSSIGKEITSMENGEN
DISPOSITIF ET PROCEDE CORRESPONDANT DE DISTRIBUTION DE PETITS VOLUMES DE LIQUIDE

(30) Priority: 26.10.1999 US 426708; 06.03.2000 EP 00200792
(43) Date of publication of application: 07.08.2002
(73) Proprietor: Tibotec BVBA, 2800 Mechelen (BE)
(72) Inventor: VELGHE, Franck, B-9800 Astene-Deinze (BE); ROELANT, Christiaan, Hubert, Simon, B-3000 Leuven (BE); DE BEUKELEER, Werner, René, Irène, B-2530 Boechout (BE); PAUWELS, Rudi, Wilfried, Jan, B-2820 Bonheiden (BE)
(74) Representative: Daelemans, Frank F.R.
(86) International application number: PCT/EP2000/010717
(87) International publication number: WO 2001/030499

(56) References cited:
- WO-A-97/15394
- US-A- 5 849 598
- US-A- 5 882 930

## Description

The present invention relates to a device and related method for delivering small volumes of liquid, and more specifically to such a device and method for simultaneously delivering liquid from a plurality of liquid delivery members into a receiving plate.

Currently, screening programs identify potential compounds for use as drugs. Specifically, drug discovery often depends on high throughput screening (HTS) techniques to screen compounds, such as liquid analytes, as potential drug candidates. In HTS, an increasingly high number of compounds, most often organized in libraries, are tested simultaneously. Simultaneous testing of a high number of compounds is due, at least in part, to technological developments, such as automated testing, combinatorial chemistry, and the polymerase chain reaction. An increased demand for new and better drugs for a variety of diseases also drives the simultaneous testing of a high number of compounds.

The standard library, or plate, for use in HTS has a 96 well per plate format. Thus, HTS systems typically have been developed for use with this format. For increasing throughput requirements and simultaneous testing of more compounds, HTS has been using higher density plates with, for example, 384, 864, 1536, and 9600 wells. These increased density plates present new problems. Particularly, the transfer of compounds into the plate often limits the testing process, as the compounds have to be brought into a high density often at a different geometry. Subsequent dispensing of solutions onto these high density plates during the testing process also poses difficulties. In addition, the introduction of robots and other forms of automation in drug discovery has led to new concerns, such as, for example, concerns regarding the speed, parallelization, volume, and reliability of robotic systems.

Current transfer and dispensing systems often rely on glass pipettors with plungers (such as the Hydrasystem™ of Robin Scientific Inc.), needles or pins, or piezo-electric pipettors. Each such system has drawbacks. For example, current pipetting systems include the relatively high cost of pipette tips, which can be substantial in automated testing. The use of needles and pins for liquid dispensing, although less expensive, lacks control over the dispensed volume and does not provide for multiple replicas to be made. Current piezo-electric pipettors usually provide increased control over dispensed volume but typically are relatively large, difficult to miniaturize, and not suitable for massive parallel dispensing due to their relative expense. Current glass pipettors, although not as expensive, share many of the disadvantages of current piezo-electric pipettors and may not dispense liquid in volumes as small as 100 nanoliters.

US-A-5,849,598, Mardis Elaine R. et al., discloses a device for delivering liquid comprising a plurality of wells and a plurality of sample tubes located in a pressure chamber. The wells and sample tubes are connected via capillaries. By means of a pump the pressure chamber can be pressurized and evacuated resulting in the transfer of liquid either from the plurality of sample tubes to the wells or vice versa.

WO97/15394 A, Bains W.A., Houzego P.J., Smithkline Beecham, describes a device for delivering liquid from a first well plate into a second well plate. When pressure is applied in the pressure chamber formed on top of the first well plate liquid present in the first well plate is transferred to the second plate beneath the first plate.

US-A-5,882,930, Baier Joerg, is concerned with a device for delivering liquid by dipping an array of pins into an array of liquid reservoirs and transferring liquid drops onto a destination surface. Alternatively, a transfer member is described comprising a reservoir for the liquid from which the liquid passes through an orifice in order to form a drop that can be applied to the destination surface.

EP-B1-1, 124,637, Applera Corp., provides a microfiltration apparatus for processing a plurality of fluid samples and a method for simultaneously forming a plurality of microfiltration wells.

The invention provides in a first aspect a device for delivering liquid, as defined in claim 1.

The term "delivery" is meant to cover any of a variety of means of conveying the liquid from the liquid delivery members to the receiving member. For instance, to deliver includes, among other possible modes of conveyance:
to dispense, i.e., liquid conveyance whereby there is no contact between the liquid to be conveyed, but not yet actually released from the delivery device, and the support onto which the liquid will be conveyed, usually portionwise;
to jet, i.e., liquid conveyance whereby the liquid is emitted in a stream;
to apply, i.e., the conveyance of the liquid whereby there is contact between the liquid to be conveyed and support onto which the liquid will be conveyed prior to the release of the liquid from the delivery device;
to print, i.e., a form of applying whereby the liquid is stamped or impressed on the support; and
to spot, i.e., another form of applying whereby the liquid is placed in a small discrete quantity or amount on the support.

The device according to the invention can be used to deliver very small volumes of liquid at high densities, i.e. number of deliveries *per* area, in parallel. The device and the related method hereinafter defined are particularly suitable for use in automated drug screening or combinatorial chemistry. However, the principles of the device and the related method may be used in other applications requiring controlled delivering of very small amounts of liquid in any specific format, or arrangement. The device according to the invention can be used to deliver any liquid, including liquid with or without cells and viscous solutions such as gels in a liquid or semi-solid state.

Preferably, the plurality of liquid delivery members is mounted in a holder and the housing is configured to contain the holder in a delivering position and the receiving member in a receiving position so that the generation of the pressure differential causes the plurality of liquid delivery members to deliver liquid onto the receiving member.

Preferably, the second pressure chamber is in fluid communication with the ambient environment.

Further, preferably, the first pressure chamber is capable of being selectively sealed from the ambient environment.

Preferably, the first pressure chamber is selectively sealed from the ambient environment by means of a plug.

In one embodiment, the plug includes a valve in fluid communication with the first pressure chamber.

In another embodiment, the housing is configured to hold a first end of each of the plurality of liquid delivery members in the second pressure chamber and a second end of each of the plurality of liquid delivery members and the receiving member in the first pressure chamber.

In another embodiment, the differential pressure generator is in communication with the first pressure chamber and is capable of creating a pressure in the first pressure chamber that is lower than the pressure in the second pressure chamber.

Preferably, the differential pressure generator is in communication with the first pressure chamber and includes a movable member capable of altering a volume of the first pressure chamber to alter a pressure within the first pressure chamber.

Preferably, the movable member seals the first pressure chamber from the ambient environment.

Further, preferably, the movable member includes a flexible member.

Still further, preferably, the flexible member is disposed between a pair of movable plates.

In a further embodiment, the device further comprises a support adjacent to the housing and capable of supporting a plurality of receiving members.

Preferably, the support is movable relative to the housing to position a receiving member in the housing.

Preferably, the support is movable relative to the housing to sequentially position receiving members in the housing one receiving member at a time.

In a further embodiment, the first pressure chamber is configured to contain the receiving member, and further comprising a positioning device within the first pressure chamber capable of positioning the receiving member in the receiving position.

Preferably, the positioning device includes a movable element having an end capable of gripping the receiving member.

In a preferred embodiment, each of the plurality of liquid delivery members is a capillary tube.

The liquid delivery members may take forms other than capillaries for delivering small volumes of liquid, for example micropipettes.

In another embodiment of the invention, the holder of the plurality of liquid delivery members and the liquid delivery members form a delivery member assembly.

In one aspect, the delivery member assembly includes a liquid storage capability.

In a further aspect, the liquid storage capability is provided by the liquid delivery members.

As indicated above according to a further aspect of the invention there is provided a method of delivering liquid from a plurality of liquid delivery members onto a receiving plate, the method comprising the steps as defined in claim 19.

Preferably, the pressure creating step includes lowering the pressure in the first pressure chamber.

Further, preferably, lowering the pressure in the first pressure chamber includes increasing the volume of the first pressure chamber.

Preferably, the volume is increased by moving a movable member.

One embodiment of the invention further comprises the steps of sealing the second pressure chamber from the first pressure chamber.

Preferably, the sealing step includes positioning a holder of the plurality of liquid delivery members between the first pressure chamber and the second pressure chamber.

In a further embodiment, the second pressure chamber is exposed to the environment, and further comprising the step of sealing the first pressure chamber from the environment prior to the pressure differential creating step.

A still further embodiment comprises, subsequent to the pressure differential creating step, the step of equalizing pressures within the first and second pressure chambers.

Another embodiment of the invention further comprises the steps of:
removing the receiving plate from the first chamber; and
repeating the receiving plate positioning step, the pressure differential creating step, and the pressure equalizing step to deliver liquid onto a subsequent receiving plate.

In a preferred embodiment each of the plurality of delivery members is a capillary tube having open ends.

Thus, another advantage of the device and method according to the invention includes miniaturization of parts, including the liquid delivery members, so that disposable capillaries may be used. The smaller parts, and specifically capillaries, result in the ability to deliver very small volumes of liquid, reducing the costs from use of rare or expensive chemicals or analytes. The delivered volume can range from one microliter to as low as ten nanoliters.

The device and related method also have flexibility in the density of the delivered volumes and in the type and size of the specific geometries of delivering. For example, the device may deliver liquid or print liquid spots at densities ranging from the present standard of 1-4 per cm² up to 100 per cm² or higher in any geometric pattern, such as round, square, or an irregular shape.

The device and method also may be used to print multiple identical prints from a single set of capillaries, or other liquid delivery members, so that numerous tests may be performed on the same analytes. A further advantage of the device and method of the present invention includes the massive delivery of liquid in parallel. For example, in automatic drug screening, the device may deliver liquid onto receiving plates with much higher than the conventional 96 wells *per* plate. Instead, delivering can occur onto plates having hundreds or thousands of wells with the same footprint dimensions.

In addition, the device and method according to the invention may be fully automated, and are preferably computer controlled. This increases the speed of delivering liquid into multiple receiving plates and minimizes human operation and error.

As indicated above, the device and its related method can operate under rapid, controlled relative changes in pressure above and below the liquid delivery members. More specifically, a delivery member such as a glass capillary can hold a column of liquid by surface tension forces between open top and bottom ends. A rapid, controlled relative pressure drop at the bottom end will force liquid to be delivered from the bottom of the capillary. Depending on various possible factors, including the type of capillary (its size, shape, and configuration), the viscosity of the liquid therein, and the relative pressure change, a drop of liquid may be released from the capillary or a drop may be suspended from the bottom end. If the former, the drop may be received by a receiving plate that may include wells corresponding to the number and arrangement of capillaries. If the latter, a receiving plate with or without wells may be accurately positioned relative to the bottom end of the capillaries to receive a printed spot of liquid from each capillary in a predetermined arrangement. The optimal gap between the receiving plate and the end of the capillary will depend on, among other things, the width of the capillary, the volume of liquid in the capillary, the pressure differential generated across the capillary, the properties of the liquid in the capillary, for example the viscosity of the liquid, and the properties of the receiving plate, for example the adhesive characteristic of the plate material. Through appropriate experimentation, one skilled in the art may determine the optimal size of the gap according to these and other various factors to result in the desired liquid print.

In one embodiment of the invention, the individual capillaries are fixedly mounted in the holder.

In a further embodiment, the individual capillaries are mounted in the holder such that longitudinal movement of the individual capillaries is possible. Longitudinal movement of an individual capillary may be used to provide a substantially optimal gap between the end of the capillary and the receiving plate.

In one aspect, the individual capillaries may be adaptably mounted in the holder such that the movement of the individual capillaries depends upon the physical and geometrical properties of the receiving plate. For instance, the capillaries may be mounted in the holder via an elastic, viscoelastic or other deformable material such that, if one edge of an individual capillary contacts the receiving plate, that individual capillary may be longitudinally deflected upward, thereby creating a gap between the end of the capillary and the receiving plate.

In combinatorial chemistry, standard parallel synthesis typically occurs in a maximum of 96 vials at a time with liquid transferred from up to eight needles. The device and method according to the invention may be used for parallel liquid delivering to support simultaneous synthesis in a much higher number of wells.

Thus, in a further aspect of the invention there is provided use of a device as hereinbefore defined in combinatorial chemistry.

The device can be used to deliver more than 96, more especially between 108 and 9600, liquids simultaneously.

Preferably, each liquid is a chemical reagent, such that by sequential addition of reagents an array of chemical compounds is prepared.

In a still further aspect of the invention there is provided use of a method as hereinbefore defined in combinatorial chemistry.

The device can be used to deliver more than 96, more especially between 108 and 9600, liquids simultaneously.

Preferably, each liquid is a chemical reagent, such that by sequential addition of reagents an array of chemical compounds is prepared.

In order to synthesise a chemical compound, typically reagent A is reacted with reagent B to form compound AB. In order to synthesise many variants of AB, analogous reactions can be performed in the wells of a 1536 well plate (48 x 32 wells). Thus, 48 variants of reagent A can be delivered onto the receiving member, for example a plate, of the device according to the invention and reacted with 32 variants of reagent B, resulting in 1536 different variants of AB. It will be appreciated that the device according to the invention presents major advantages in the delivering of reagents in a multi-well receptacle such as one containing 1536 small wells as hereinafter further exemplified.

DNA chips are for instance glass or plastic surfaces that represent a large number of DNA fragments arrayed at discrete sites. Hybridization of RNA or DNA-derived samples to DNA chips allows one to monitor expression of mRNAs or the occurrence of polymorphisms in genomic DNA. The technology may identify gene polymorphisms that predispose man to disease, gene regulation events involved in disease progression, and more-effective disease treatments. Thus, in yet another aspect of the invention there is provided use of a device as hereinbefore defined in DNA chip technology, more in particular, arraying DNA.

The invention will now be described by way of example and with reference to the accompanying drawings in which:
Fig. 1 is a cross-sectional view of a delivery device according to an embodiment of the present invention;
Fig. 2 is a cross-sectional view of capillaries delivering liquid onto a receiving plate in a delivery device according to an embodiment of the present invention;
Fig. 3 is a graph of displacement of plate elements within the delivery device of Fig. 1 and a graph of pressure differential in chambers of the delivery device of Fig. 1;
Fig. 4 is a cross-sectional front view of a delivery device according to another embodiment of the present invention;
Fig. 5 is a cross-sectional side view of the device of Fig. 4;
Fig. 6 is a cross-sectional front view of the device of Fig. 4 with a portion of its print head displaced vertically upwards;
Fig. 7 is a partial cross-sectional front view of the device of Fig. 4 with a receiving plate positioned to receive liquid from capillaries;
Fig. 8 is a cross-sectional front view of the device of Fig. 4 with a receiving plate positioned to receive liquid from capillaries;
Fig. 9 is a top view of the device of Fig. 4;
Fig. 10 is a front view of capillaries and a holder for use in a delivery device according to embodiments of the present invention;
Fig. 11 is a top view of the capillaries and holder of Fig. 10;
Fig. 12 is a front view of the holder of Fig. 10;
Fig. 13 is a top view of a bottom plate of the holder of Fig. 10;
Fig. 14 is a bottom view of the top plate of the holder of Fig. 10 showing insertion of side plates;
Fig. 15 is a front view of larger side plates of the holder of Fig. 10;
Fig. 16 is a front view of other smaller side plates for the holder of Fig. 10;
Fig. 17A is an enlarged partial front view of side plates for the holder of Fig. 10, showing two lip types;
Fig. 17B is an enlarged front view of a lip type of a side plate, before and after the lip type is bent;
Figs. 18-21 respectively are bottom, side, cross-sectional front, and top views of an upper housing of the device of Fig. 4, with Fig. 20 taken at line A-A in Fig. 21;
Fig. 22 is a bottom view and a cross-sectional side view of an upper round plate element of the print head of the device of Fig. 4;
Fig. 23 is a bottom view and a cross-sectional side view of a lower round plate element of the device of Fig. 4;
Figs. 24-26 respectively are bottom, cross-sectional front, and top views of an upper plate of the print head of the device of Fig. 4, with Fig. 25 being taken at line A-A of Fig. 26;
Fig. 27 is a partial cross-sectional view of the upper plate of Figs. 24-26, showing a groove for an O-ring, taken at either line B-B or line C-C of Fig. 24;
Figs. 28-30 respectively are bottom, cross-sectional front, and top views of a middle plate of the print head of the device of Fig. 4, with Fig. 29 taken at line A-A of Fig. 30;
Fig. 31-33 respectively are bottom, cross-sectional front, and top views of a lower plate of the print head of the device of Fig. 4, with Fig. 32 taken at line A-A of Fig. 33;
Fig. 34 is a partial cross-sectional view of the lower plate of Figs. 31-33, showing a groove for an O-ring, taken at line B-B of Fig. 31;
Figs. 35-39 respectively are bottom, cross-sectional side, cross-sectional front, side, and top views of a pneumatically driven element of the device of Fig. 4, with Fig. 37 taken at lines A-A of Figs. 35 and 39, and with Fig. 36 taken at line B-B of Fig. 37;
Fig. 40 is a partial cross-sectional view of the element of Figs. 35-39, showing a groove for an O-ring, taken at line C-C of Fig. 39;
Figs. 41-42 respectively are front and top views of a gripper of the device of Fig. 4; and
Figs. 43-44 respectively are cross-sectional front and top views of a mounting plate of the print head of the device of Fig. 4, with Fig. 44 taken at line A-A of Fig. 43.

The accompanying Figures and the following description refer to the present preferred and exemplary embodiments of the device and related method according to the invention. Like reference numerals refer to like parts in the various Figures.

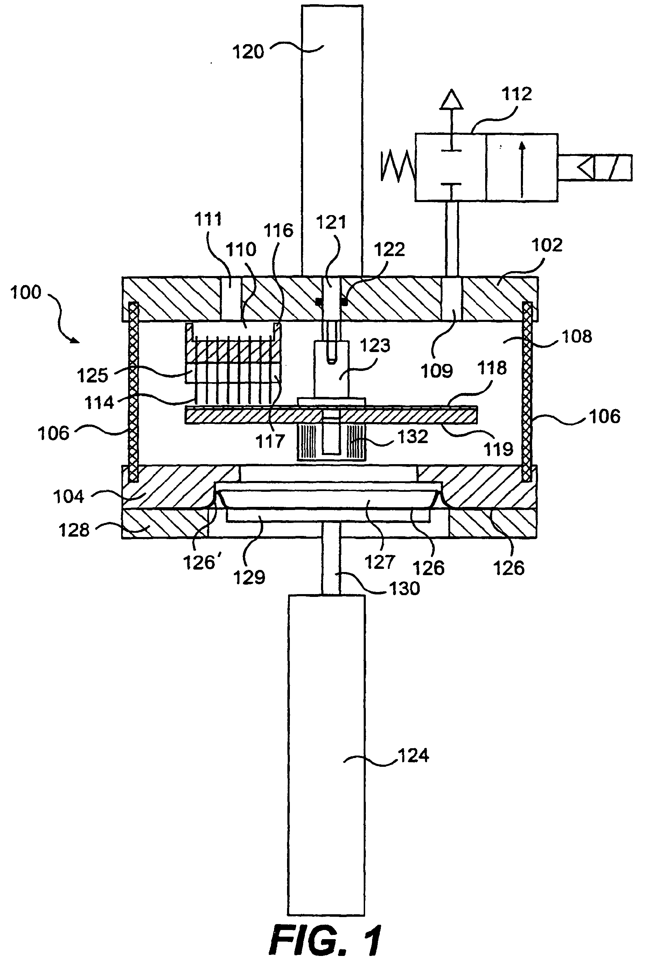

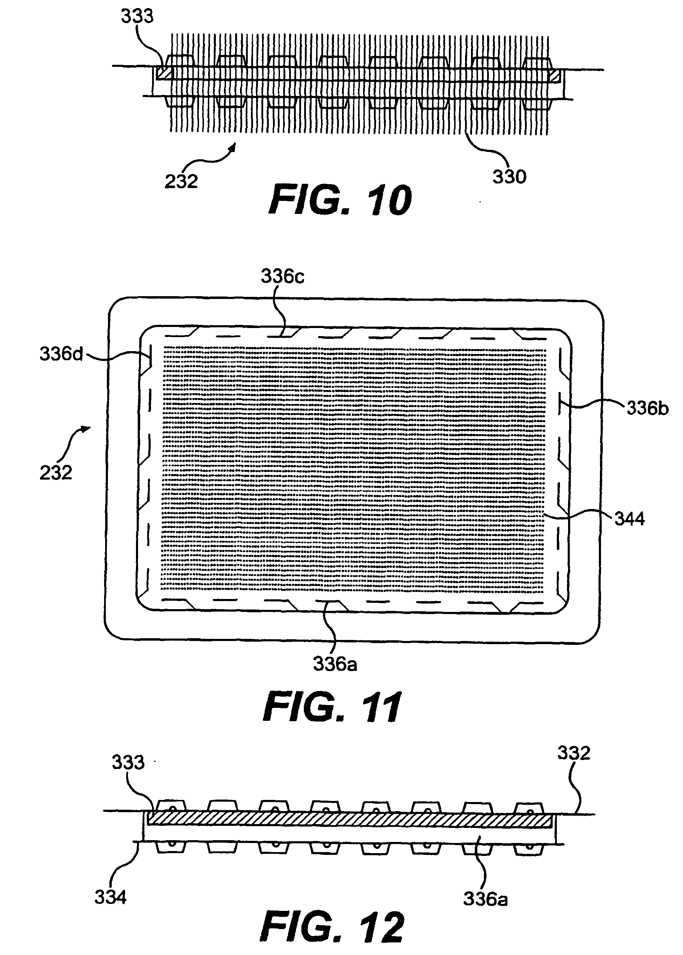

Figure 1 shows a delivery device 100 according to an embodiment of the present invention. Device 100 includes a housing having a top 102, a bottom 104, and sides 106 that define a first chamber 108. A support 116 extends from the bottom surface of housing top 102. Support 116 supports a holder 117 that contains a plurality of liquid delivery members, for example, capillaries 114. The plurality of capillaries may be a grid of, for example, eight rows of twelve capillaries per row. Each capillary 114 contains a liquid solution to be delivered. Capillaries 114 may be affixed to holder 117 by an ultraviolet-cured glue on the outside of each capillary 114 or by any other suitable adhesive or fixing means. Alternatively, capillaries 114 may be mounted to holder 117 via an adaptable coupling, as described in more detail below in connection with Figs. 10 and 12.

Capillaries 114 and holder 117 may form a liquid delivery assembly 125. Liquid delivery assembly 125 preferably includes a liquid storage capability. For instance, capillaries 114 may be appropriately sized to include a liquid storage portion 131. This liquid storage portion 131 of capillaries 114 may provide, among other things, the capability for making multiple replicas. Alternatively, a separate liquid storage element in fluid connection with capillaries 114 may be provided. The liquid delivery assembly 125 may provide a convenient way to store a specific volume of liquid compound, for instance, a volume that corresponds to the amount of liquid to be delivered to a single microtiter plate or that corresponds to the amount of liquid to be delivered to a select series of receiving plates. Moreover, the liquid deliver assembly 125 may provide a convenient way to store, transport, and manage a compound library. Each liquid delivery assembly 125 may store a different compound in a compact, easy to handle format of a grid of closely spaced capillaries 114.

Housing top 102 and support 116 with holder 117 therein define a second chamber 110 sealed from first chamber 108 apart from the liquid connection through the capillaries 114. Chamber 110 is in fluid communication with ambient surroundings through opening 111. A valve 112 couples to housing top 102 and is in fluid communication with chamber 108 *via* port 109. Valve 112 is preferably a fast-responding, pneumatically-operable valve. However, the scope of this invention includes other suitable types of valves for altering the pressure within chamber 108 in a manner described below.

A receiving plate 118 mounts onto a mounting plate 119 within chamber 108. Receiving plate 118 is positioned at a right angle relative to capillaries 114 for receiving the liquid solution in each capillary 114. Receiving plate 118 may be separated from the bottom ends of capillaries 114 by an optimal distance, as discussed above. A bolt 132 or other like fastening mechanism may be used to fix receiving plate 118 to mounting plate 119. Alternatively, receiving plate 118 may sit loosely in position on mounting plate 119. Mounting plate 119 connects to an end of a linear servodrive 120 through a rod 121 and shaft 123. A seal 122, such as an O-ring, seals around rod 121 to seal chamber 108 from ambient conditions. Servodrive 120 rotatably and vertically positions receiving plate 118 relative to capillaries 114. Various types of suitable actuators may be used to accurately position receiving plate 118 relative to capillaries 114 and still be within the scope of this invention.

Housing bottom 104 couples to a bottom plate 128. Housing bottom 104 and bottom plate 128 each include a central throughhole. Top and bottom round plates elements 127 and 129 float within the central throughholes of bottom 104 and plate 128 by provision of a thin, circular flexible membrane 126. Round plate elements 127, 129 and membrane 126 act as a differential pressure generator, as will be described below. Flexible membrane 126 is firmly positioned between housing bottom 104 and bottom plate 128 and extends into the throughholes of bottom 104 and plate 128 to be firmly sandwiched between top and bottom round plate elements 127 and 129. The portion of membrane 126 within the throughholes and not sandwiched between elements 127, 129 separates chamber 108 from ambient environment. This membrane portion, identified by reference numeral 126', also has some gather (i.e. fold or wrinkle), as shown in Figure 1, that permits floating plate elements 127, 129 to move vertically. That vertical movement alters the volume of chamber 108 and creates a pressure differential between chambers 108 and 110, as will be described. A linear servodrive 124 couples to bottom round plate element 129 *via* a shaft 130 to control vertical displacement of plates 127, 129 and flexible membrane 126. Once again, other types of suitable actuators may be used to accurately displace these elements vertically and still be within the scope of this invention.

In operation, housing top 102 may be lifted or otherwise separated from housing sides 106 to position receiving plate 118 onto mounting plate 119 and to position holder 117 with capillaries 114 onto support 116. Housing top 102 then may rejoin sides 106.

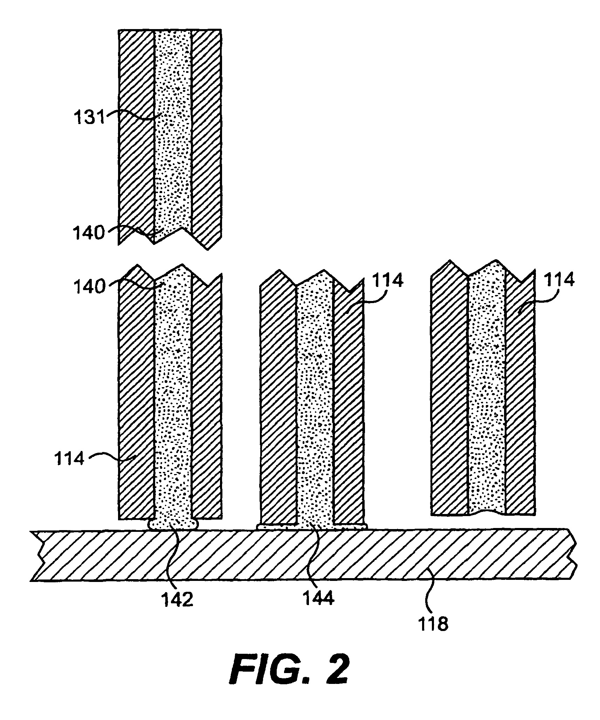

Servodrive 120 then rotatably and vertically positions receiving plate 118 under capillaries 114. An open top of each capillary 114 is exposed to chamber 110, whereas as open bottom of each capillary 114 is exposed to chamber 108. At this point, because of equal pressures within chambers 108 and 110, equal pressures exist at the ends of capillaries 114 and a column of liquid, for example a buffer solution, is held within each capillary 114 by surface tension forces. This state is shown in capillary 114 at the right in Figure 2.

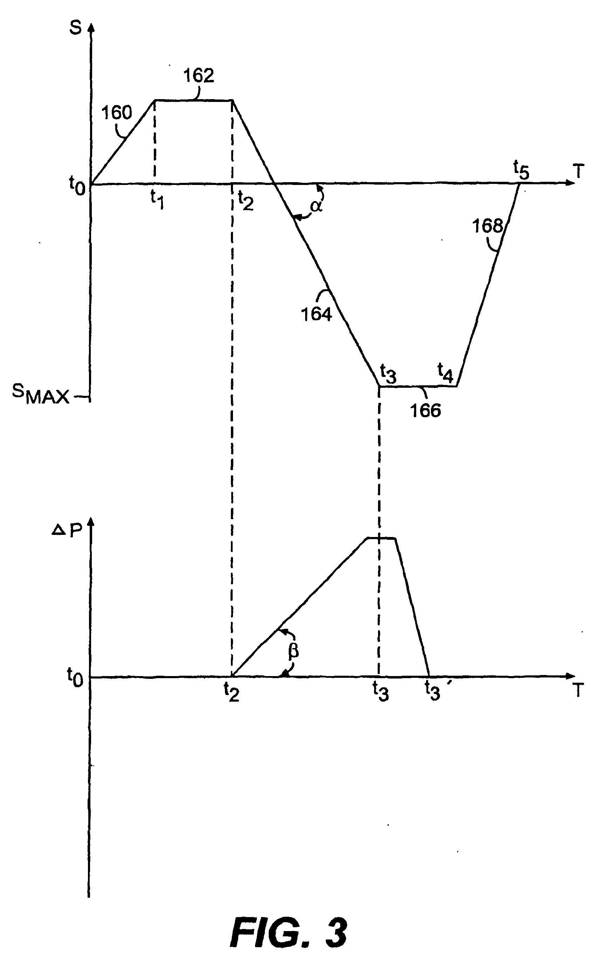

A print cycle then begins by actuating servodrive 124 to move plates 127 and 129 vertically upwards. Chamber 108 then is plugged at port 109 *via* valve 112. While chamber 110 remains at ambient pressure due to opening 111, a pressure drop is created in chamber 108 by servodrive 124 displacing plates 127, 129 vertically downwards. That vertical displacement downwards increases the volume of chamber 108 to create the pressure drop. The pressure drop is preferably sudden and brief and performed in a controlled manner, as explained below, for example, in connection with Figure 3. Thus, a lower pressure will exist in chamber 108 relative to chamber 110. A top of each capillary 114 therefore will be exposed to a greater pressure than a bottom of each capillary 114 and a difference in pressure results across the liquid in each capillary 114. This difference in pressure causes a microdroplet of liquid 142 to form at the bottom tip of each capillary 114, as shown in Figure 2. Droplet 142 touches receiving plate 118 and accurate vertical positioning of receiving plate 118 relative to capillaries 114 forms an oblate (flattened) liquid spheroid 144 between the capillary tip and receiving plate 118, as also shown in Figure 2. Liquid spheroid 144 leaves a printed spot on receiving plate 118. As explained above, depending on various factors, the capillary instead may release a drop of liquid.

After the brief, sudden pressure drop (which creates the printed spots), valve 112 is actuated to increase the pressure within chamber 108 and equalize the pressures within chambers 108 and 110. Valve 112 may perform these functions by opening port 109 and exposing chamber 108 to ambient surroundings. Servodrive 124 also may return plates 127, 129 and flexible member 126 to their original positions. At this point, capillary forces (surface tension) will dominate once again and microdroplet 142 will return into capillary 114. If desired, receiving plate 118 may be rotatably repositioned relative to capillaries 114 to print another copy of liquid solution onto receiving plate 118 from the same set of capillaries 114. When the desired number of print copies has been made onto plate 118, plate 118 may be removed from delivery device 100 for use in chemical testing. Holder 117 and its capillaries 114 may be removed after printing the desired number of print copies and/or all the liquid within capillaries 114 is used.

The top graph in Figure 3 shows an exemplary position curve as a function of time for plates 127, 129 and membrane 126. The bottom graph in Figure 3 shows the absolute difference in pressure ΔP in chambers 108 and 110 as a function of time. Reference numeral 160 at the top graph (displacement v. time) represents the initial upwards displacement of plates 127, 129 and membrane 126 at the beginning of the print cycle. This upwards displacements occurs at approximately constant velocity until a time t₁. Between times t₁ and t₂, represented by reference numeral 162, plates 127, 129 and membrane 126 stay in position as chamber 108 is closed to ambient surroundings. Up until time t₂, the pressures within chambers 108 and 110 are equal, i.e. ΔP=0.

From times t₂ to t₃ (reference numeral 164), plates 127, 129 and membrane 126 are moved downwards to create a pressure drop in chamber 108. The downwards displacement occurs at approximately constant velocity (angle α represents the displacement velocity) and the absolute difference in pressure between chambers 108 and 110 is shown in the bottom graph of Figure 3 (angle β represents the pressure drop speed). Printing occurs during this time. The optimal displacement velocity and pressure drop speed are functions of, for example, the properties of the liquid to be delivered and the capillary containing the liquid. An exemplary pressure drop may be in the range of approximately 20 to 30 mm H₂O in a fraction of a second.

At time t₃, valve 112 is actuated to increase pressure within chamber 108. Pressure is increased until time t₃' when the pressures within chambers 108 and 110 once again are equalized. Also beginning at time t₃, plates 127, 129 and membrane 126 initially stay in position (from times t₃ to t₄; reference numeral 166), and then return to their initial position (from times t₄ to t₅; reference numeral 168). The return to initial position occurs at approximately constant velocity and completes the print cycle.

Figure 3 shows exemplary position and differential pressure curves. The present invention encompasses curves varying from those shown in Figure 3. For example, during the stages represented by numerals 160, 164, and 168, velocity of the components can vary. Also, the relative times and displacements shown may be modified according to the preferred characteristics of the print cycle. It is also to be understood that a complete print cycle occurs rapidly, and preferably within seconds, and more preferably within a range of ten seconds or less. As a further modification from the curves shown in Figure 3, increases in differential pressure may be achieved over time in a stepwise fashion for multiple deliveries. In such a case, at time intervals, the differential pressure may be increased rapidly in equal or unequal amounts so that delivery occurs at each time interval.

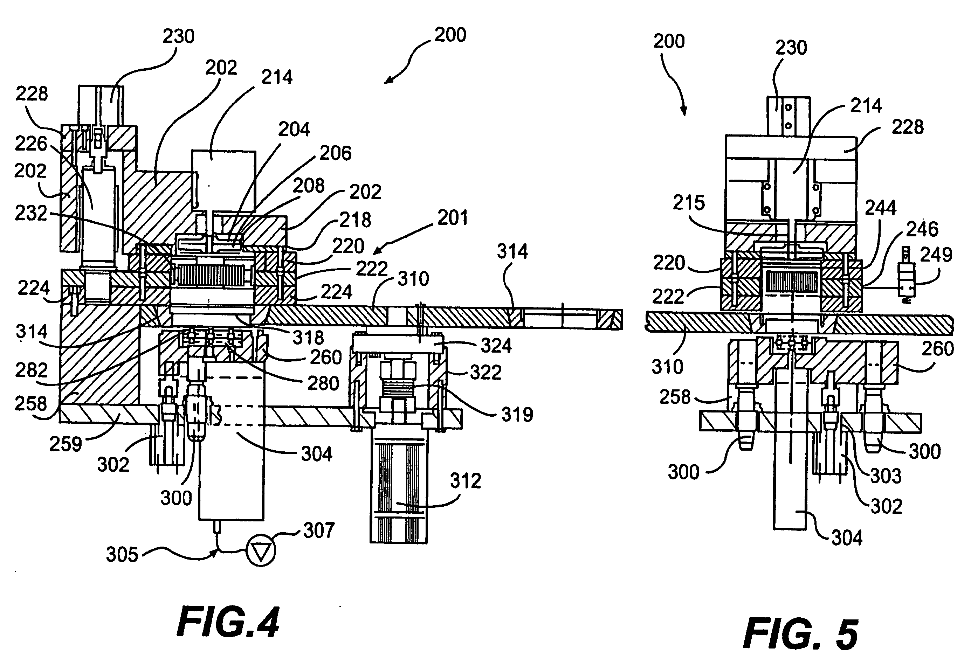

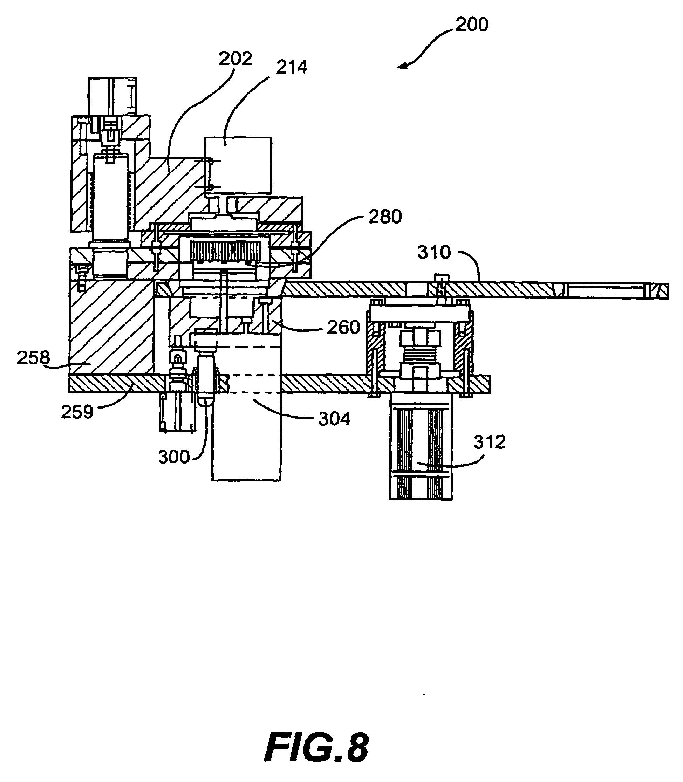

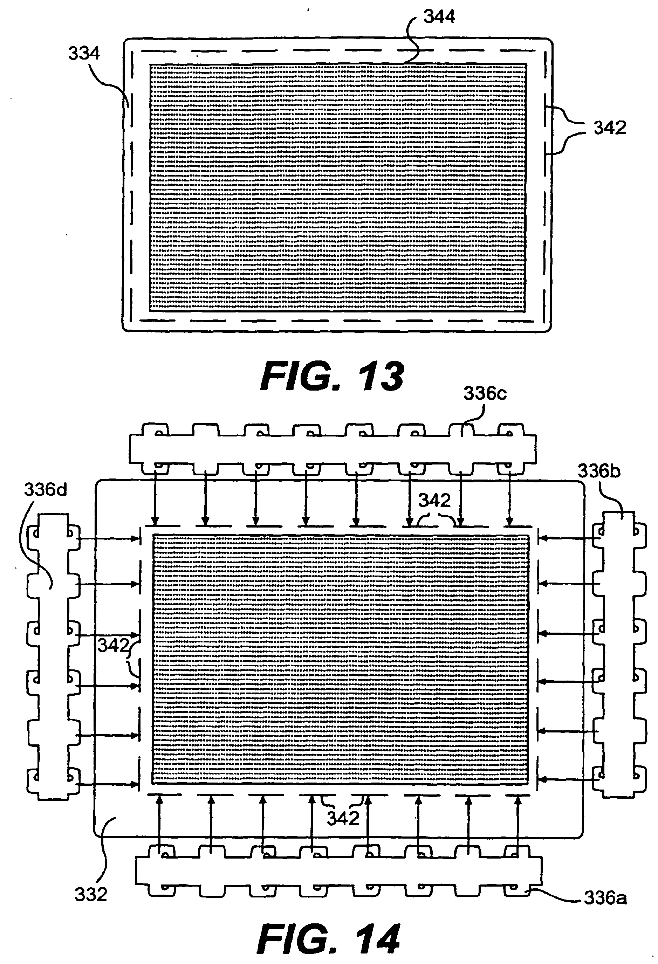

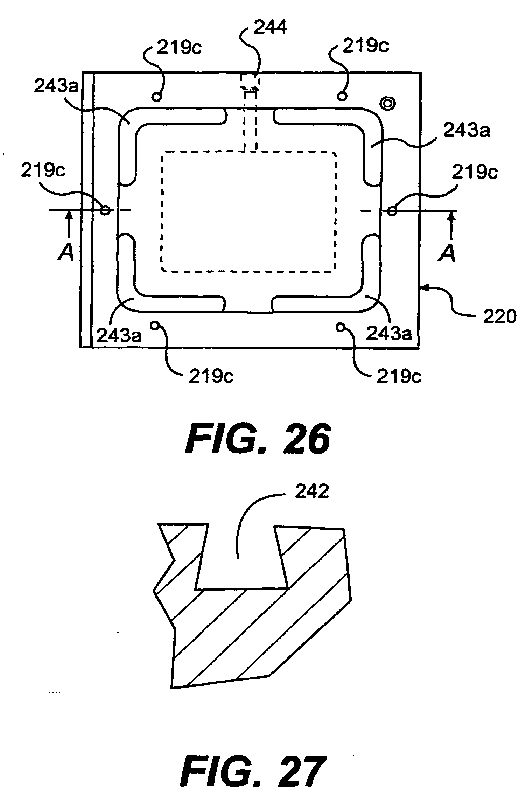

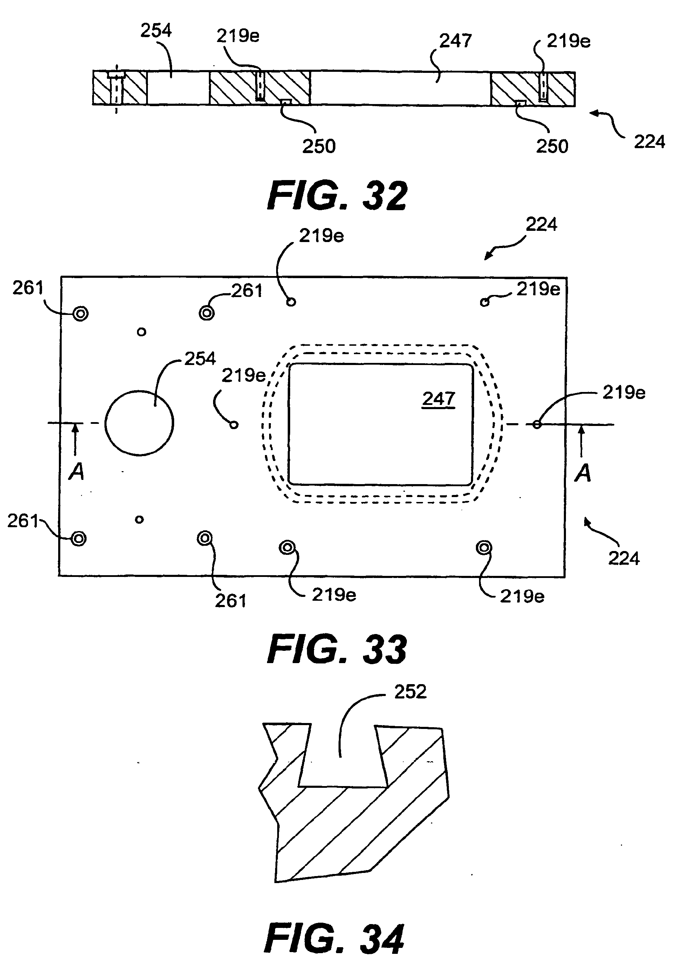

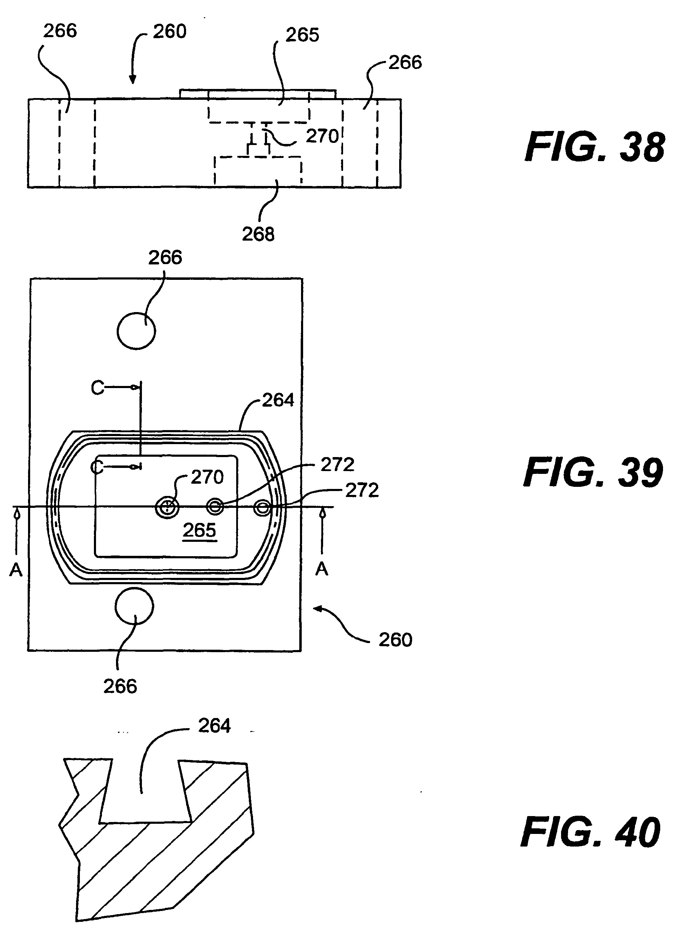

Figures 4-9 and Figures 18-43 illustrate another preferred embodiment of a delivery device 200 according to the present invention. Figures 10-17 illustrate a preferred embodiment of a holder and capillaries for use in device 200. Delivery device 200 and the holder and capillaries for its use operate under very similar principles as delivery device 100 described above. Much more detail of device 200 and its holder, however, are provided.

For purposes of describing its many components, delivery device 200 can be thought of as having a turntable 310 in which one or more receiving plates 318 rest, a top portion above turntable 310, and a bottom portion below turntable 310. The top portion includes a print head 201. As shown in Figures 4-8, the main components of the top portion, including print head 201, include: an upper housing 202; upper and lower round plates 204 and 206 respectively; a flexible member 208; a mounting plate 218; upper, middle, and lower plates 220, 222, and 224 respectively; a linear servopositioner 214; a linear ball bush guide 226; a mounting block 228; and an air cylinder 230. Of these components, round plates 204 and 206, flexible member 208, and plates 218, 220, 222, and 224, comprise print head 201. All of these components and their relationship and connection to each other will now be described in detail.

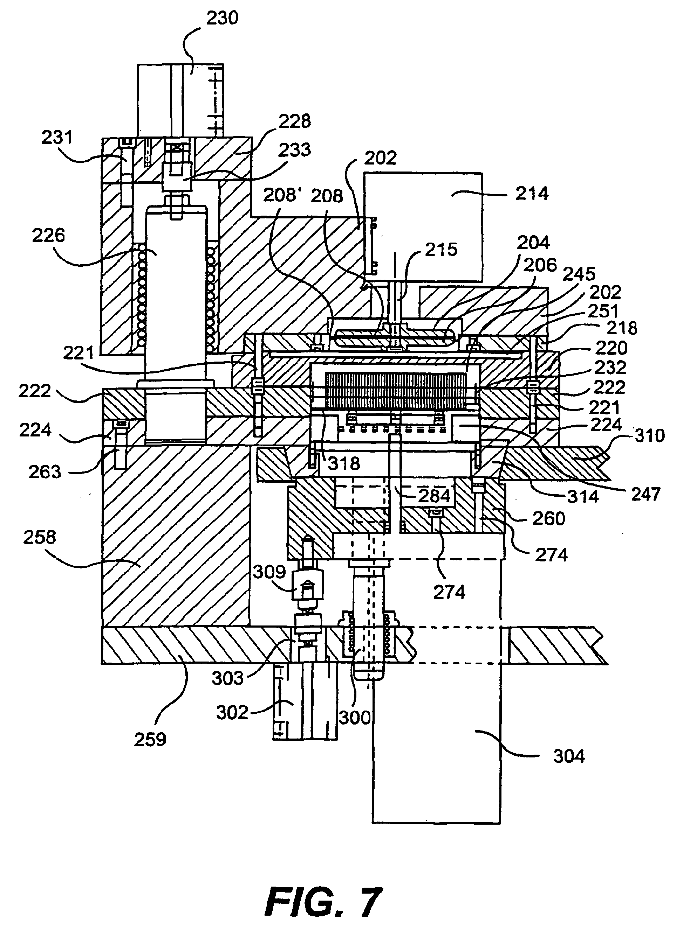

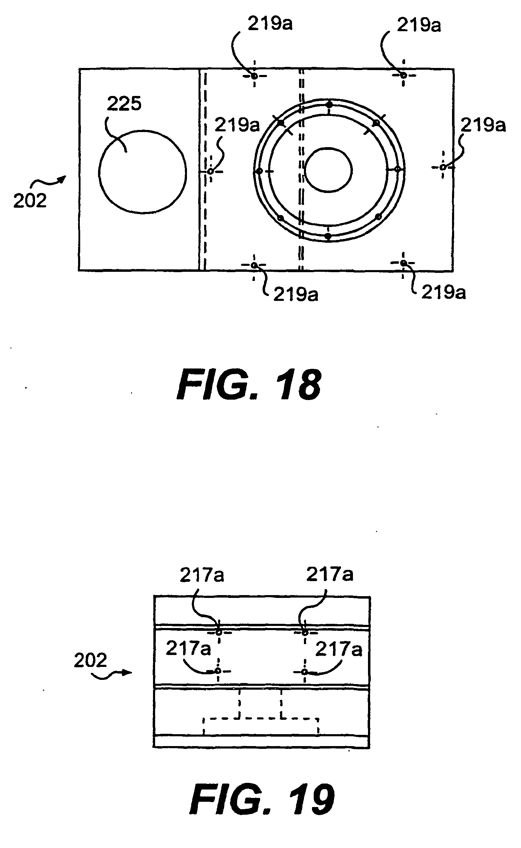

Upper housing 202 is shown in detail in Figures 18-21. Figure 18 is a bottom view of housing 202, whereas Figures 19-21 are side, cross-sectional front, and top views respectively. Upper housing 202 includes a hole 203 to receive a shaft 215 of linear servopositioner 214. Servopositioner 214 mounts to upper housing 202 at points 217a via screws, bolts, or other like suitable connection means. The bottom portion of hole 203 receives upper and lower round plate elements 204, 206 between which a portion of flexible member 208 is sandwiched. Shaft 215 (see Figure 7) connects to upper round plate element 204. Upper housing 202 also includes a hole 225 to receive linear ball bush guide 226 to which housing 202 fixedly mounts. Mounting block 228 mounts to a top of upper housing 202 at mounting points 229 *via* pins, bolts, or other suitable fastening means.

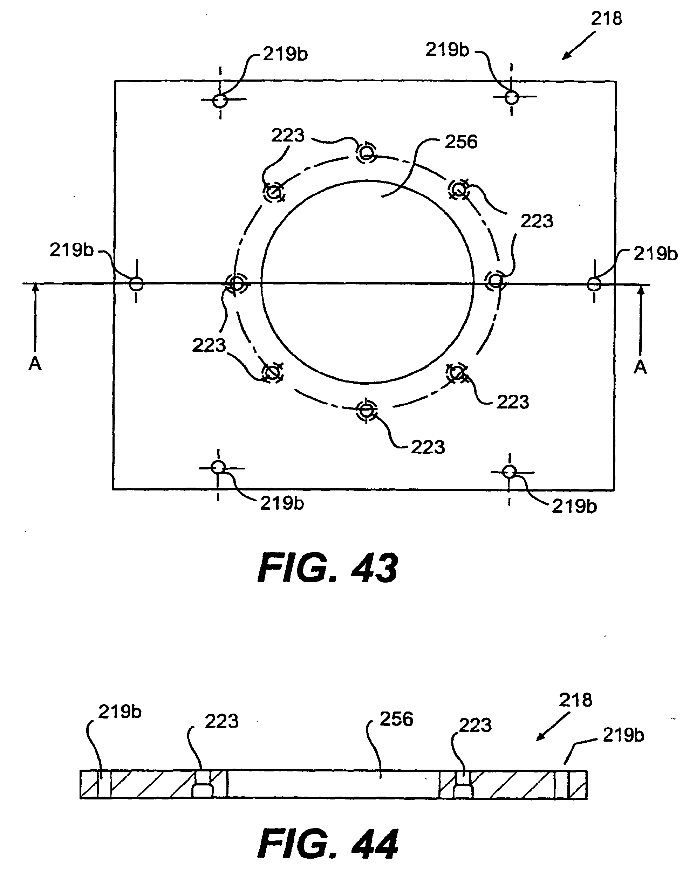

Mounting plate 218, shown in detail in Figures 43 and 44, is fixed to upper housing 202 at mounting points 219a (see Figure 18) and mounting points 219b (see Figure 43). Another portion of flexible member 208 is sandwiched between upper housing 202 and mounting plate 218. Mounting plate 218 includes a central hole 256 to receive upper and lower round plate elements 204, 206. A plurality of fixing points 223 (see Figure 43) surround hole 256 and receive bolts or other suitable fastening means to secure flexible membrane 208 between housing 202 and mounting plate 218.

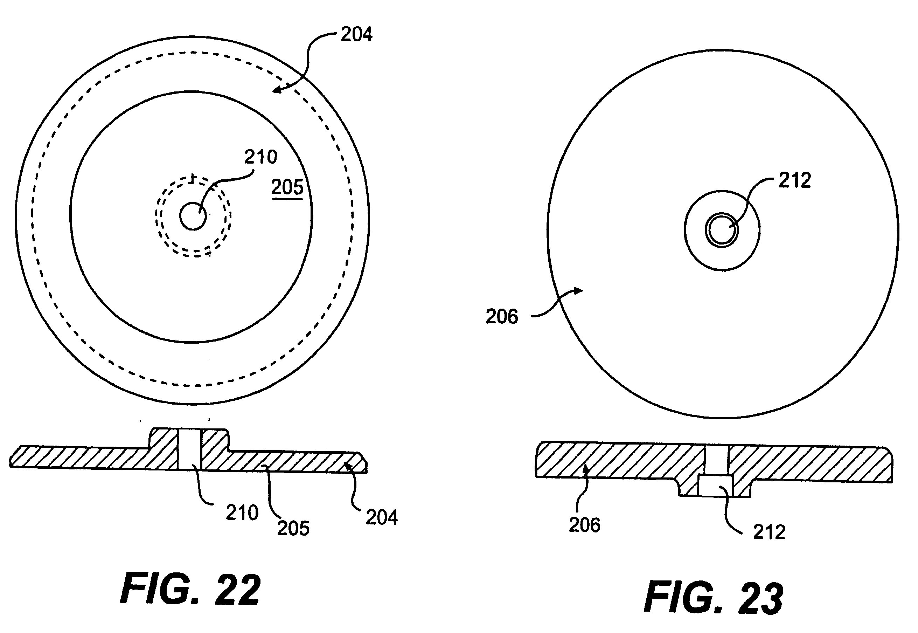

Figures 22 and 23 show details of upper and lower round plate elements 204, 206. Elements 204, 206 include center holes 210 and 212, respectively, for receiving a bolt, pin, or other fastening means to couple to shaft 215 of servopositioner 214. The bottom of upper round plate element 204 includes a central area 205 that is slightly recessed to help achieve an optimal seal.

Flexible member 208 extends between upper housing 202 and mounting plate 218 and between upper and lower round plate elements 204, 206. As in the first embodiment described above, and as shown most clearly in Figure 7, the portion of membrane 208 not sandwiched between these structural components, identified by reference numeral 208', has some gather (i.e. fold or wrinkle). The gather 208' permits plate elements 204, 206 to move vertically and ultimately create a pressure differential between upper and lower pressure chambers, as will be described. Member 208 is preferably circular, relatively thin, and manufactured from a rubber or other like flexible material.

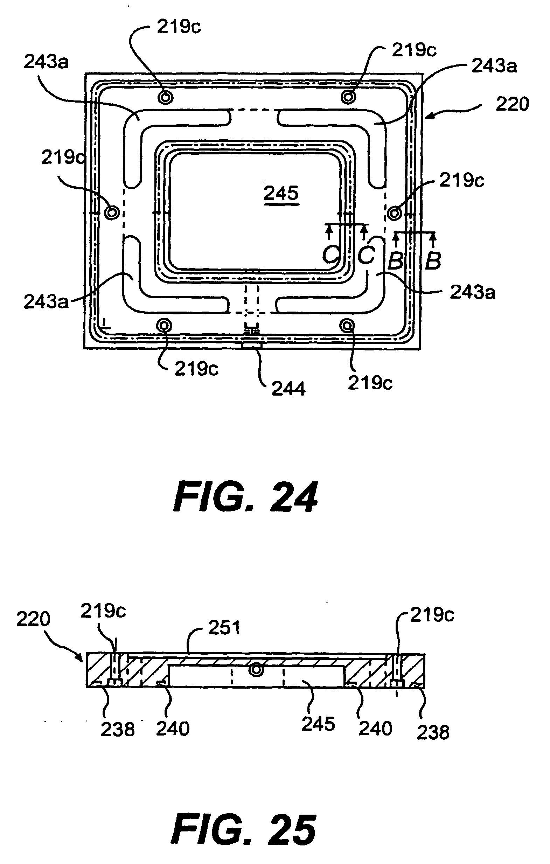

Upper plate 220, shown in detail in Figures 24-27, is located below and fixed to mounting plate 218. Upper plate 220 includes a pair of O-ring seals 238, 240 that sit within grooves 242 at the bottom of upper plate 220. Seal 240 surrounds an upper pressure chamber 245 defined by upper plate 220 and the top of the holder of the capillaries, to be described. Seal 240 seals upper pressure chamber 245 (which remains at ambient pressure) from L-shaped passages 243a. Passages 243a provide a fluid connection between a cavity 251 (defined by the top of plate 220 and the bottom of plates 216, 218 and flexible member 208--see Figure 7) and a lower pressure chamber 247 (defined primarily by middle and lower plates 222 and 224-see Figures 7 and 28-33). Seal 238 surrounds passages 243a and seals passages 243a from ambient environment. Upper plate 220 also includes an orifice 244 providing a fluid connection between the ambient environment and upper pressure chamber 245 (see Figure 5) to maintain chamber 245 at ambient pressure. Upper plate 220 connects to points 219b of mounting plate 218 at mounting points 219c.

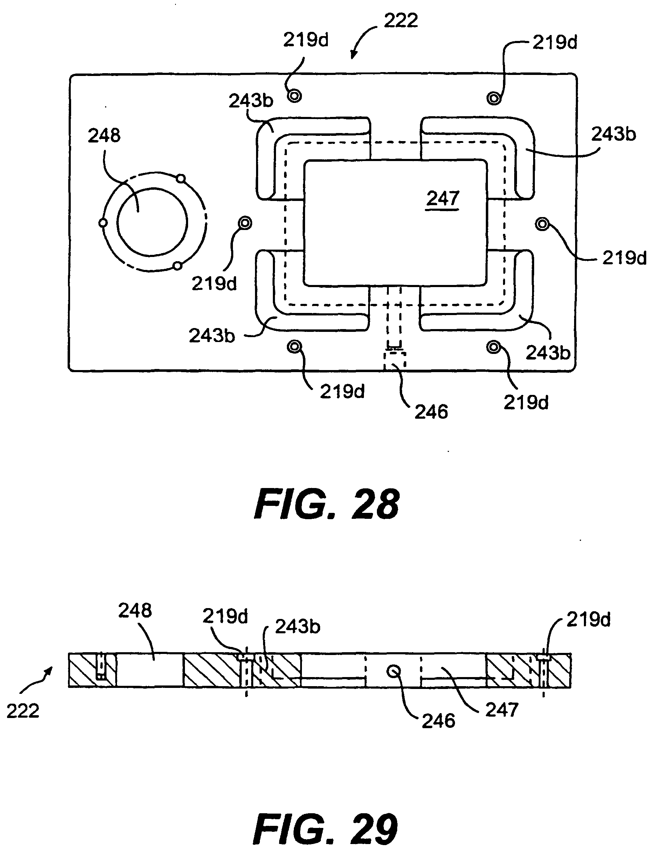

Middle plate 222, shown in detail in Figures 28-30, is located below upper plate 220 and couples to points 219c of upper plate 220 at mounting points 219d. Middle plate 222 includes an orifice 246 in fluid connection with lower pressure chamber 247. Orifice 246 provides a fluid connection between a valve 249 and chamber 247, as shown in Figure 5, to alter the pressure within chamber 247. More specifically, valve 249 raises the pressure within chamber 247 at the end of a print cycle by exposing chamber 247 to ambient conditions and aerating chamber 247, as will be described. Middle plate 222 also includes L-shaped passages 243b that (along with passages 243a) provide a fluid connection between lower pressure chamber 247 and cavity 251.
Middle plate 222 also includes a circular hole 248 for receiving linear ball bush guide 226.

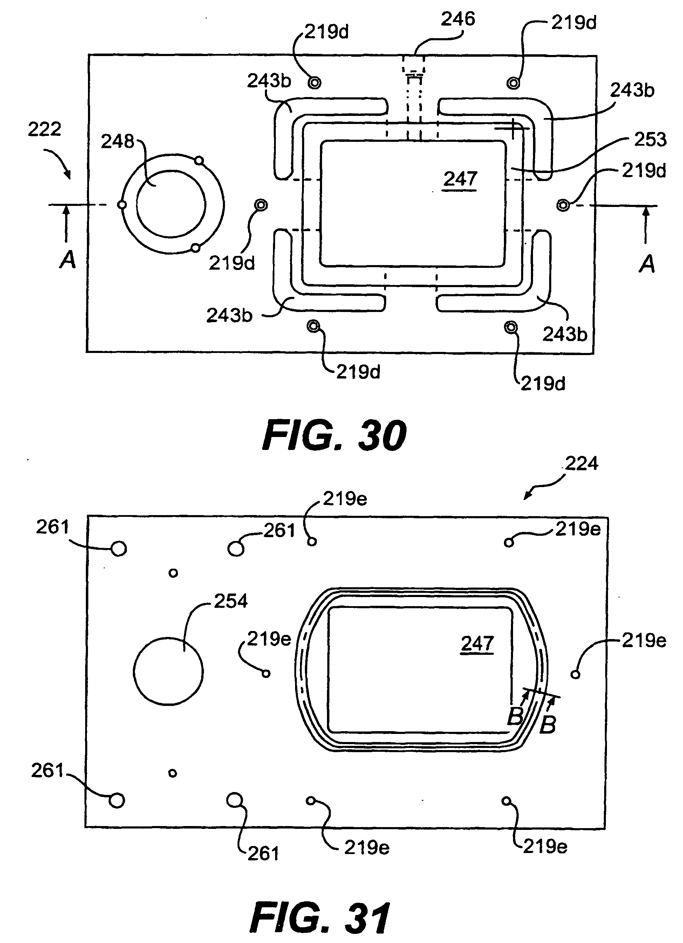

A lower plate 224, shown in detail in Figures 31-34, is located beneath middle plate 220. Lower plate 224 includes an O-ring 250 seated within groove 252. O-ring 250 surrounds and seals chamber 247 from ambient surroundings. Lower plate 224 further includes a circular hole 254 to accommodate linear ball bush guide 226. Lower plate 224 mounts to points 219d of middle plate 222 at mounting points 219e.

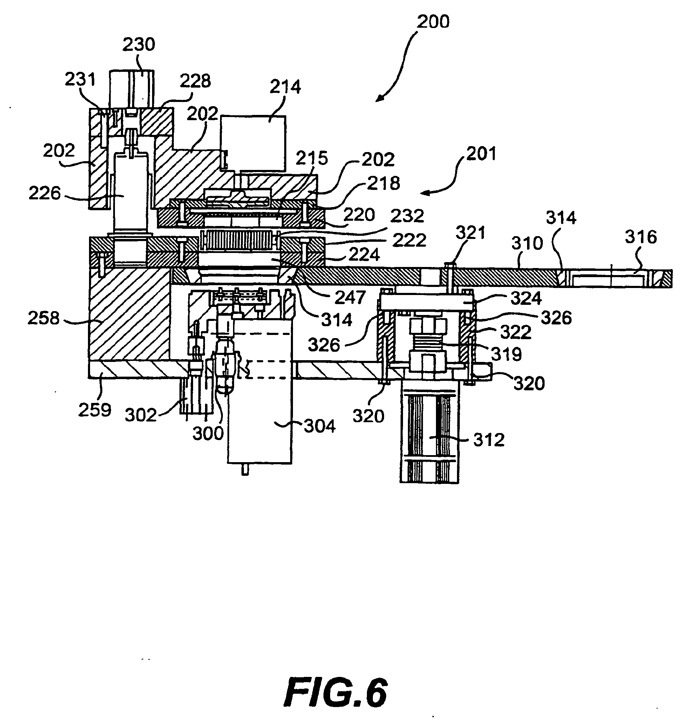

As described, the connection between housing 202 and plates 218, 220, 222, and 224 occurs at mounting points 219a, b, c, d, e. As shown most clearly in Figure 7, the preferred means of connecting these five components includes a pin or bolt 221 extending between each of points 219a, b, c, d, e. Each pin or bolt 221 is configured to permit upper plate 220 to separate from middle plate 222 for insertion and removal of a holder 232 of capillaries, as shown in Figure 6. The scope of the present invention includes other means of connecting these components to achieve this purpose.

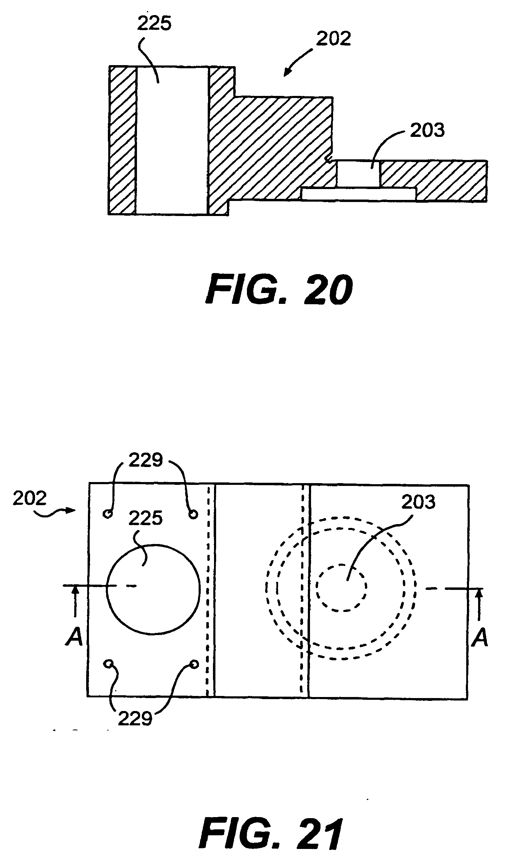

As shown most clearly in Figures 6 and 7, mounting block 228 fixedly couples to an upper portion of upper housing 202 via mounting pins 231. As shown in Figure 21, mounting pins 231 mount at points 229 of upper housing 202. Air cylinder 230 mounts above mounting block 228. Mounting block 228 includes a throughhole through which air cylinder 230 couples to linear ball bush guide 226. That coupling preferably includes a floating joint 233 and other suitable connection means, including, for example, bolts or pins. Air cylinder 230 controls the vertical movement of housing 202 and plates 218, 220 to separate plates 220 and 222 and permit insertion of a holder of capillaries, as described below.

The bottom portion of delivery device 200 includes the following main components: a mounting block 258; a bottom support plate 259; a pneumatically driven element 260; a gripper 280; a pair of ball bush guides 300; an air cylinder 302; a linear servodrive 304; and a servodrive 312. These components and their relationship and connection to each other will now be described in detail.

Mounting block 258 connects the top portion of delivery device 200 to the bottom portion of device 200. Mounting block 258 connects to lower plate 224 at points 261 on plate 224 (see Figures 31-33) *via* bolts 263 (see Figure 7) or other suitable fastening means. Mounting block 258 also connects to bottom support plate 259 which supports various components of the bottom portion of device 200.

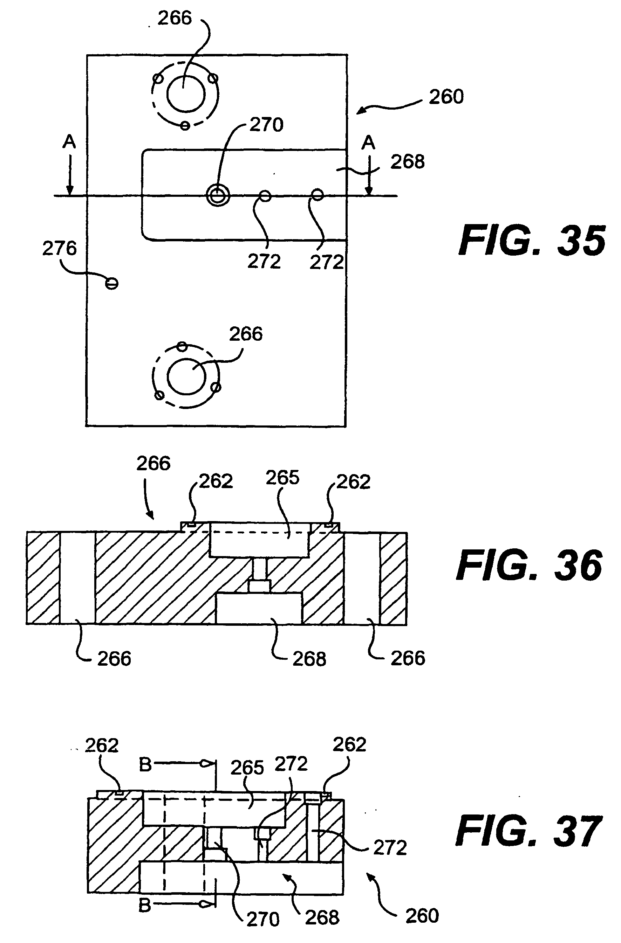

Pneumatically driven element 260 is shown in detail in Figures 35-40. Figure 35 is a bottom view, whereas Figures 36-39 are cross-sectional side, cross-sectional front, side, and top views, respectively. The top of element 260 includes an O-ring 262 within a groove 264. O-ring 262 surrounds a cavity 265, also at the top of element 260. During operation, cavity 265 is in fluid connection with lower pressure chamber 247 and O-ring 262 sits between element 260 and a plate holder 314 as described below. O-ring 262 seals cavity 265 (and thereby pressure chamber 247) from ambient surroundings. Element 260 also includes two circular throughholes 266 to accommodate linear ball bush guides 300. A bottom cavity 268 in element 260 accommodates linear servodrive 304. Servodrive 304 extends through a hole in plate 259 and couples to element 260 at mounting holes 272 *via* bolts 274 (see Figure 7) or other suitable fastening means. Linear servodrive 304 also couples to a center mounting point 281 of gripper 280 by a shaft 284 (Figure 7). Shaft 284 extends through a throughhole 270 in element 260. Linear servodrive 304 moves gripper 280 vertically. Suitable O-rings or other sealing structure may be included between shaft 284 and element 260 to seal cavity 265 (and thereby pressure chamber 247) from ambient surroundings during operation.

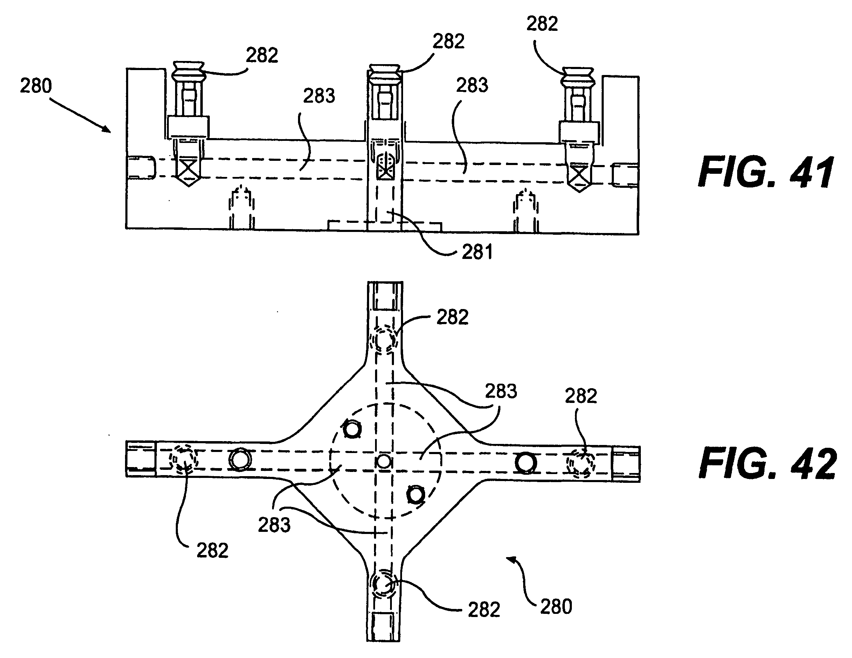

Gripper 280, shown in detail in Figures 41 and 42, mounts within cavity 265 of element 260. Gripper 280 includes a plurality of bellows 282 with suction cups at a top of bellows 282. Figures 41 and 42 show gripper 280 having four bellows 282 and corresponding suction cups at 90 degree intervals. It is to be understood that more or less bellows may be used as appropriate and still be within the scope of the present invention. Gripper 280 includes a manifold throughhole 283 for connecting the suction cups to a vacuum source. Shaft 284, connecting servodrive 304 to gripper 280, also includes a vacuum throughhole 283. The vacuum throughhole of shaft 284 also connects, *via* servodrive 304, to external vacuum tubing 305 extending from servodrive 304, as shown in Figure 4. Vacuum tubing 305 connects to an external vacuum source 307, such as, for example, a pneumatically-driven, multi-stage ejector. External vacuum source 307 provides a vacuum through external tubing 305, servodrive 304, throughhole shaft 284, manifold throughhole 283, and to the suction cups. The vacuum at the suction cups permit gripper 280 to securely engage receiving plate 318 for accurate displacement of receiving plate 318.

Air cylinder 302 mounts to bottom plate 259. As best shown in Figure 7, a shaft of air cylinder 302 extends through a throughhole 303 of plate 259 and mechanically couples to element 260. The coupling occurs *via* a floating joint 309 and a pin, bolt, or other like device extending to point 276 in element 260 (see Figure 35). When actuated, air cylinder 302 raises or lowers element 260.

Two linear ball bush guides 300, best shown in Figure 5, ensure vertical alignment when element 260 is moved vertically. Each guide 300 mounts to bottom plate 259, extends through plate 259, and is received within a hole 266 of pneumatically driven element 260.

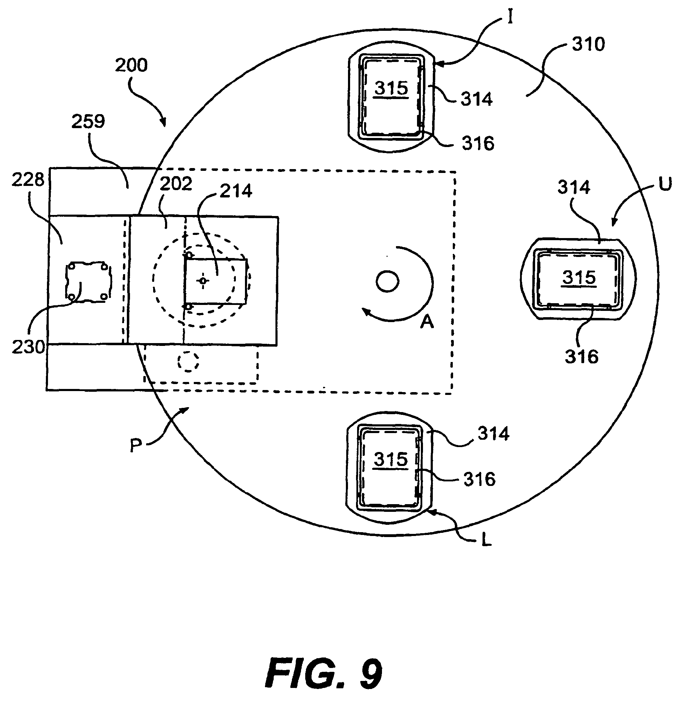

Turntable 310 mounts between the top and bottom portions of delivery device 200. As shown most clearly in Figures 6 and 9, turntable 310 includes a plurality of throughholes each to receive a plate holder 314. Each plate holder 314 has a frustoconical shape corresponding to the shape of the throughhole in turntable 310. These corresponding shapes retain each plate holder 314 within turntable 310. Figure 9 shows turntable 310 with four plate holders 314 arranged at 90 degree intervals around turntable 310. It is to be understood that any number of plate holders 314 preferably spaced at equal intervals within turntable 310 may be used and be within the scope of the present invention.

Each plate holder 314 includes a central cavity 315 and a seat 316 for supporting a receiving plate 318. Plate 318 lies loosely within holder 314. Receiving plate 318 may be a flat plate made of glass, plastic, or other suitable material, or may be a plate with a plurality of wells to receive liquid from the liquid delivery members.

A servodrive 312 couples to turntable 310 to rotatably position turntable 310 and thereby accurately position a receiving plate 318 relative to a matrix of capillaries, as described below. As shown in Figure 6, servodrive 312 extends through a throughhole in plate 259 and is coupled to a bottom portion of a bellows coupling 319. The top portion of bellows coupling 319 is coupled to a bottom portion of a bearing 324. The top portion of bearing 324 is coupled to turntable 310 via a bolt 321 or other suitable like fastening means. Through these connections, servodrive 312 mechanically couples to turntable 310.

Bellows coupling 319 is contained within a housing 322. Housing 322 rigidly connects at its bottom to plate 259 *via* bolts 320 or other suitable like fastening means. Housing 322 rigidly connects at its top to bearing 324 *via* bolts 326 or other suitable like fastening means.

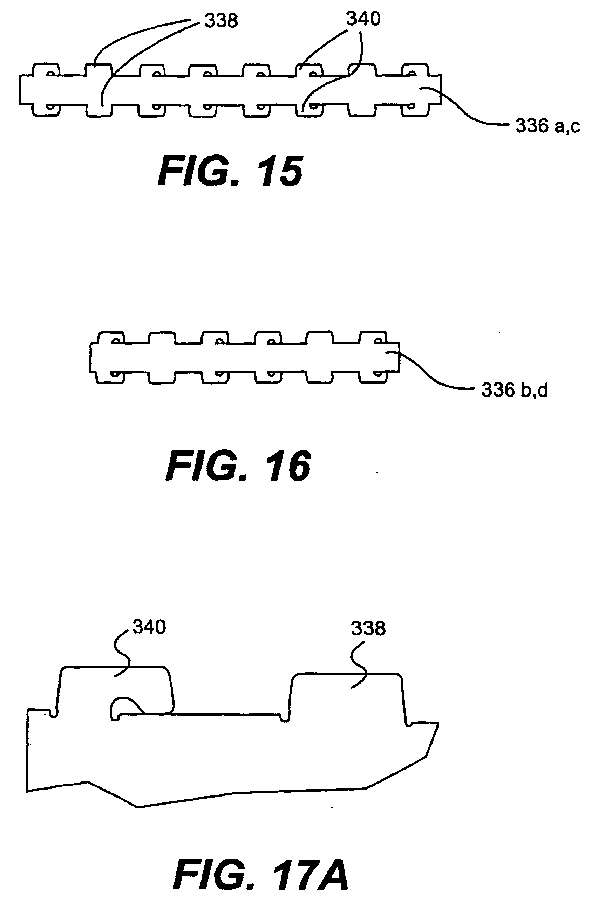

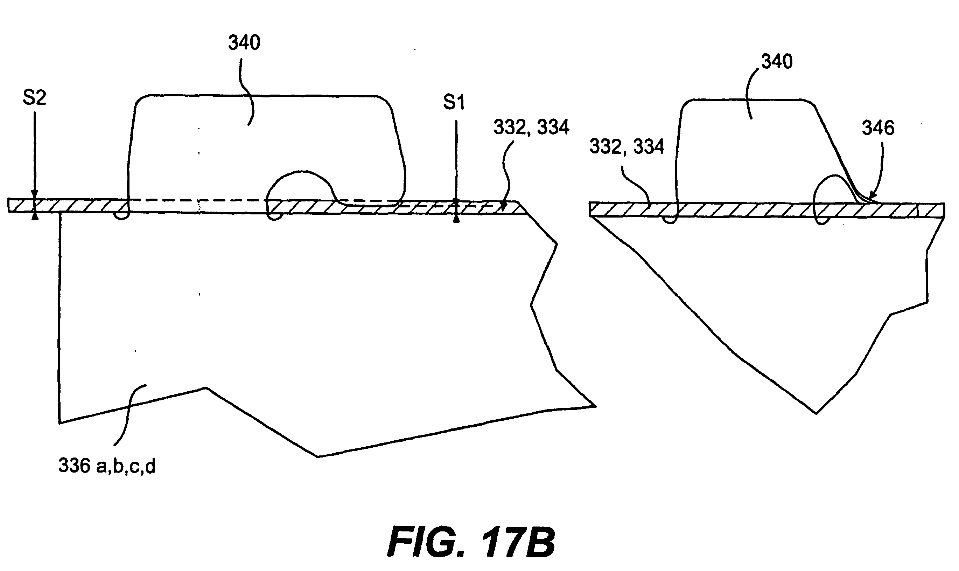

A holder 232 of liquid delivery members, preferably capillaries 330, mounts within and separates pressure chambers 245, 247 of delivery device 200. Figures 10 -17 show details of holder 232. Holder 232 includes a top plate 332, a bottom plate 334, and side plates 336a,b,c,d to connect top and bottom plates 332, 334. Side plates 336 include lips 338 and 340 that slide within slots 342 of top and bottom plates 332, 334. Lips 338 are in the form of flat planes and ensure alignment of top and bottom plates 332, 334. As shown in Figure 17B, each lip 340 includes a hook that may be bent at, for example, a 45 degree angle, once lip 340 inserts within a slot 342. This creates tension to draw top and bottom plates 332, 334 towards side plates 336 and create a stable, rigid holder 232. More specifically, and with reference to Figure 17B, top and bottom plates 332, 334 each have a thickness S2. Each hook of a lip type 340 is a distance S1 from a top edge of its side plate 336a, b, c, d. Distance S1 is less than thickness S2. Thus, when lip type 340 extends through a slot 342 of top or bottom plate 332, 334, the hook may be bent to engage a surface of top or bottom plate 332, 334, as shown by reference numeral 346 in Figure 17B. This creates pressure on the surface of top or bottom plate 332, 334 at the bend, creating a rigid holder 232.

Top and bottom plates 332, 334 and side plates 336 are preferably made of copper and are preferably manufactured from a photochemical etching process to make wafer-thin sheets. Each of top and bottom plates 332, 334 includes a grid 344 of etched perforations. In an embodiment, grid 344 includes twelve rows of eight perforations to accommodate 96 capillaries 330. Grid 344, however, can have any number of rows of varying number of perforations to accommodate much higher numbers of capillaries. The grids 344 of plates 332 and 334 are accurately aligned to ensure alignment of capillaries 330 mounted therein. A thin coat of adhesive, preferably UV-sensitive glue, spread between capillaries 330 along top plate 332 fixes capillaries 330 in holder 232 and ensures that the bottom tips of capillaries 330 are in the same vertical position. The adhesive also acts to seal pressure chamber 245 above top plate 332 from pressure chamber 247 below top plate 332 when holder 232 is placed within delivery device 200.

In an alternative embodiment of the invention, individual capillaries 330 are mounted in holder 232 to allow longitudinal or up and down movements of individual capillaries 330. Longitudinal movement of individual capillary 330 may be used to provide a substantially optimal gap between the end of capillary 330 and receiving plate 318. Longitudinal movement of individual capillaries 330 would generally be due to irregularities in the receiving plate 318 that cause the receiving plate 318 to come into contact with the end of capillaries 330. For instance, one edge of a slightly canted individual capillary 330 may contact receiving plate 318, thereby causing that individual capillary 330 to be longitudinally deflected upward.

As shown in Figs. 10 and 12, individual capillaries 330 may be adaptably mounted in holder 232 such that the movement of individual capillaries 330 depends upon the physical and geometrical properties of receiving plate 318. For instance, capillaries 330 may be mounted in holder 232 via an elastic, viscoelastic, or other deformable material 333, such as a sheet of silicone, rubber or other suitably deformable material or a layer or sheet a of semi-solid material, such as a semi-solid grease. Material 333 may be provided with a grid 345 of perforations 347 and capillaries 330 may be press fit into the perforations. Material 333 may be mounted to holder 232 in a variety of ways, including: sandwiching material 333 between plates 332 and 334, gluing material 333 to one or both of plates 332 and 334, or spreading a layer of material 333 onto plate 332 and/or plate 334. In this embodiment, individual capillaries 330 would not be fixed to top plate 332 of holder 232 via a UV-sensitive glue. Rather, capillaries 330 would be allowed to move longitudinally relative to plates 332 and 334 as material 333 deflects or deforms.

As shown in Figure 6, holder 232 inserts within delivery device 200 when top plate 220 is separated from middle plate 222. An outer rim of top plate 332 of holder 232 rests on a top surface of middle plate 222. More particularly, the outer rim of top plate 332 rests within a slightly recessed surface 253 of middle plate 222. The amount of recess of surface 253 is approximately the thickness of top plate 332 so that top plate 332 lies flush with the top surface of middle plate 222. When plates 220 and 222 close and sandwich the outer rim of top plate 332 therebetween, pressure chamber 245 is separated from pressure chamber 247. Chamber 245 is in fluid communication with the ambient environment *via* orifice 244, as shown in Figure 5, and contains the open top of each capillary 330. Chamber 247 contains an open bottom of each capillary 330. Chambers 245 and 247 are sealed from one another by holder 232, and specifically top plate 332 and the sealing adhesive around capillaries 330. Whereas top plate 332 serves this sealing function, bottom plate 334 aids in aligning holder 232 and capillaries 330 therein.

Operation of delivery device 200 will now be described in connection with Figures 4-9. Prior to operation of delivery device 200, a liquid solution is aspirated into a plurality of capillaries 330, or other disposable delivery members such as micropipettes. The aspirated liquid is retained inside capillaries 330 by capillary surface tension forces. Next, filled capillaries 330 are assembled into the etched perforations of holder 232 to form a high density grid of a plurality of filled capillaries 330. Capillaries 330 are assembled into any predetermined geometric distribution and preferably packed at a high density, for example twelve rows of eight capillaries. Capillaries 330 are then fixed into holder 232 by, for example, UV-sensitive glue, so that the bottom tip of each capillary 330 is at the same vertical position. The filling of the capillaries and assembly of capillaries into a holder may be done by any suitable method, including that described in PCT International Application No. PCT/IB 98/01399 entitled "Method for the Rapid Screening of Analytes" and filed September 8, 1998, the entire disclosure of which is incorporated herein by reference.

Holder 232 with capillaries 330 then may be assembled into delivery device 200. To do so, air cylinder 230 is actuated to move upwards and thereby lift housing 202 and a portion of print head 201, specifically plates 218 and 220. This causes top plate 220 to separate from middle plate 222. Upper housing 202 and its connected components, including plates 218, 220, servopositioner 214, round plates 204,206, are then swung clear to expose the upper surface of middle plates 222. These components swing about the axis of guide 226. An outer rim surface of top plate 332 of holder 232 then is set on plate 222. Housing 202 and its connected components then are swung back in place and air cylinder 230 is actuated to move downwards to lower housing 202 and rejoin plates 220 and 222. At this point, chamber 245 is hermetically sealed from chamber 247.

Figure 9 shows four stations in turntable 310 of device 200. These stations are loading L, printing P, inspection and/or identification I, and unloading U. Turntable 310 rotates clockwise, as shown by arrow A in Figure 9, to move a receiving plate 318 between stations. Plate 318 first is loaded onto turntable 310 at loading station L. Printing onto receiving plate 318 occurs at printing station P. Receiving plate 318 may be inspected for quality and/or marked for identification purposes at station I. Receiving plate 318 then may be unloaded from turntable 310 at station U. All of these stations and their operations may be controlled by suitable computer software derived by one skilled in the art. As an alternative, a manual control panel may be provided at each station for control of the operations at each station. Moreover, robots or other peripherals may be provided at each station to perform the functions of that station. In addition, peripherals may be added between stations to perform appropriate additional functions. For example, a sensor may be provided between loading station L and printing station P to determine if a receiving plate 318 is located on turntable 310 prior to the printing operation.

Once receiving plate 318 has been loaded onto turntable 310 at station L, turntable 310 is rotated 90 degrees clockwise so that receiving plate 318 is positioned at printing station P. This situation is shown in Figures 4 and 5. Next, air cylinder 302 is actuated to displace element 260 upwards and force plate holder 314 upwards against bottom plate 224. The meshing of element 260, plate holder 314, and bottom plate 224 is shown in Figure 7. Figure 7 also shows the next step of the printing process, wherein servodrive 304 has been actuated to displace gripper 280 vertically so that its bellows 282 with suction cups engage receiving plate 318 and force receiving plate 318 vertically. Receiving plate 318 is moved vertically to a position just under the bottom tips of capillaries 330, as shown in Figure 7. The optimal gap between the bottom tip of capillaries 330 and the top surface of plate 318 will depend on a variety of factors, as mentioned above.

The structural components of delivery device 200 are now in position to begin a print cycle. The print cycle begins by actuating servodrive 214 to move plates 204 and 206 vertically downwards. It will be apparent that the movement of plates 204 and 206 downwards is optional, as a pressure differential between chambers 245 and 247 may be created without this movement. Next, lower pressure chamber 247 is plugged at orifice 246 by valve 249. While upper chamber 245 remains at ambient pressure due to orifice 244, a pressure drop is created in lower pressure chamber 247 by servodrive 214 displacing plates 204, 206 vertically upwards. The pressure drop is preferably sudden and brief and performed in a controlled manner similar to that described above in connection with Figures 1-3. Thus, a lower pressure will exist in lower pressure chamber 247 relative to upper pressure chamber 245. A top of each capillary 330 therefore will be exposed to a greater pressure than a bottom of each capillary 330 and a difference in pressure results across the liquid in each capillary 330. Similar to that described above in connection with Figures 1-3, a printed spot of liquid from each capillary 330 will form on receiving plate 318.

After the brief, sudden pressure drop, valve 249 is opened to expose lower pressure chamber 247 to ambient conditions and aerate chamber 247. This increases the pressure within lower pressure chamber 247 and equalizes the pressures within chambers 247 and 245. Servodrive 214 also may be actuated to return plates 204, 206 to their original position. As described earlier, capillary forces will dominate once again, forcing liquid to remain within each capillary 330.

At the same time, servodrive 304 is actuated to displace gripper 280 vertically downwards and reposition receiving plate 318 onto plate holder 314. Air cylinder 302 then is actuated to lower element 260 and thus lower plate holder 314 back into its original position within turntable 310. Next, turntable 310 is rotated clockwise so that receiving plate 318 enters inspection/identification station I, where any number of suitable inspection, identification, or other post-printing functions may be performed. Receiving plate 318 then is rotated to unloading station U, where plate 318 may be unloaded.

This process may be repeated for any number of receiving plates 318 until liquid in the capillaries 330 has been used, resulting in a number of replica prints of the liquid within capillaries 330.

It will be apparent to those skilled in the art that various modifications and variations can be made to the delivery device and related method of the present invention without departing from the scope or spirit of the invention. For example, the described embodiments employ a pressure drop in the chamber below the capillaries. Instead, the printing device may be configured so that a differential pressure generator creates a pressure rise in the chamber above the capillaries to result in a similar print cycle. In such a case, the upper chamber may be connected to the external environment to equalize the pressures in the chambers, as necessary.

As a further example, the present invention also encompasses moving the holder with capillaries toward a stationary receiving plate. Moreover, the described embodiments include various servodrives and air cylinders to perform many of the mechanical movements during printing. Any suitable actuation mechanisms may be used for these movements. In addition, any of various suitable elements for fastening the structural components of the delivery device together may be used, and any suitable sealing element may be used in place of each described O-ring.

As an even further modification of the described device and method, the delivering of liquid from the capillaries may be performed through controlled vibration of the liquid or the holder of the capillaries. In such a case, the differential pressure generator creates well-defined combinations of repeated pressure changes. These pressure changes, and the use of particular shaped capillaries, including a narrow open bottom end, can create standing waves in the liquid column inside the capillary. This can result in delivering a stream of droplets.

### Example

### Combinatorial chemistry in a 1536-well plate:

Combinatorial chemistry as carried out in a 1536-well plate would proceed generally as follows:
The working volume of a 1536-well plate is 10 µl *per* well. A minimal concentratation of 0.1mg of reaction product in 10 µl is required if one requires to make at least 833 spots. A typical concentration for reactants A and B in tetrahydrofuran (THF) would be 0.1M. Thus, 5 µl of 0.1M of A and 5 µl of 0.1M of B would be mixed in each well. In the case of product C having a molecular weight of the order of 500 g/mole, 0.25 mg of product would be obtained in each 10 µl. This would be in the correct range for screening.
In order to test these reaction conditions, V-shape microvials were used before transferring to plates of the type used in accordance with the invention. Accordingly, 5 µl of reagent B (0.1M) was added to 5 µl of reagent A (0.1M) under argon atmosphere at room temperature. The following types of reactions were carried out as shown in the following table:

| **Type of reaction** | **Reagent A** | **Reagent B** |
|---|---|---|
| UREAS | Primary amines Hindered primary amines Secondary amines | Aromatic isocyanate Non-aromatic isocyanate |
| AMIDES | Hindered primary amines | Aromatic acyl chlorides |
| SULFONAMIDES | Hindered primary amines Secondary amines | Aromatic sulfonyl chlorides |
| CARBAMATES | N-succinimidyl carbonate of secondary alcohols | Hindered primary amines |
| THIOUREAS | Hindered primary amines Secondary amines | Aromatic isothiocyanate Non-aromatic isothiocyanate |

The various reactions were analyzed by liquid chromatography coupled to mass spectrometry (LC/MS) and the desired product was obtained in each case.

Given that one is working at such a small scale some evaporation can occur while working with the 1536-well plate, another experiment was carried out as follows. 5 of reagent A was added to a vial and the solvent evaporated and then 5 µl of reagent B was added over the residue. LC/MS did not show any difference between this procedure and the previous procedure carried out without evaporation and under an argon atmosphere.

The above experiments demonstrate that it is possible to use the liquid delivery device in accordance with the invention with 1536-well plates so as to achieve an automatic delivering of reagents A and B.

The present invention covers all of these modifications and variations of this invention provided they come within the scope of the appended claims and their equivalents.

## Claims

1. A device (100) for delivering liquid, comprising:
- a housing (102, 104, 106) comprising a plurality of removable liquid delivery members containing a liquid, and comprising a removable receiving member in a receiving position to receive the liquid from the plurality of liquid delivery members,
the housing delimiting a first pressure chamber (108) and a second pressure chamber (110), the first pressure chamber capable of being separated by the liquid relative to the second pressure chamber; and
- a differential pressure generator (126, 127, 129) operably connected to one of the first and second pressure chambers, the generator being capable of generating a pressure differential between the first and second pressure chambers to cause the plurality of liquid delivery members to deliver liquid onto the receiving member;
**characterized in that** the differential pressure generator (126, 127, 129) includes a movable member capable of altering a volume of one of the first and second pressure chambers to alter a pressure within one of the first and second pressure chambers.

2. A device according to claim 1, wherein the plurality of liquid delivery members is mounted in a holder (117) and the housing comprises the holder in a delivering position and the receiving member in a receiving position so that the generation of the pressure differential causes the plurality of liquid delivery members to deliver liquid onto the receiving member.

3. A device according to claim 1 or 2, wherein the second pressure chamber is in fluid communication with the ambient environment.

4. A device according to any preceding claim, wherein the first pressure chamber is capable of being selectively sealed from the ambient environment.

5. A device according to claim 4, wherein the first pressure chamber is selectively sealed from the ambient environment by means of a plug.

6. A device according to claim 5, wherein the plug includes a valve (112) in fluid communication with the first pressure chamber.

7. A device according to any preceding claim, wherein the housing comprises a first end of each of the plurality of liquid delivery members in the second pressure chamber and a second end of each of the plurality of liquid delivery members and the receiving member in the first pressure chamber.

8. A device according to any preceding claim, wherein the differential pressure generator is in communication with the first pressure chamber and is capable of creating a pressure in the first pressure chamber that is lower than the pressure in the second pressure chamber.

9. A device according to any preceding claim, wherein the movable member seals the first pressure chamber from the ambient environment.

10. A device according to any preceding claim, wherein the movable member includes a flexible member (126).

11. A device according to claim 10, wherein the flexible member is disposed between a pair of movable plates.

12. A device according to any preceding claim, further comprising a support (116) extending from the bottom surface of the housing top (102) and capable of supporting a plurality of receiving members.

13. A device according to claim 12, wherein the support is movable relative to the housing to position a receiving member in the housing.

14. A device according to claim 12 or 13, wherein the support is movable relative to the housing to sequentially position receiving members in the housing one receiving member at a time.

15. A device according to any preceding claim, wherein the first pressure chamber is configured to contain the receiving member, and further comprising a positioning device within the first pressure chamber capable of positioning the receiving member in the receiving position.

16. A device according to claim 15, wherein the positioning device includes a movable element having an end capable of gripping the receiving member.

17. A device according to any preceding claim, wherein each of the plurality of liquid delivery members is a capillary tube (114).

18. A device according to claim 17, wherein each of the capillary tubes includes a liquid storage portion for providing the capability of multiple liquid deliveries.

19. A method of delivering liquid from a plurality of liquid delivery members onto a receiving plate, the method comprising the steps of:
positioning a plurality of liquid delivery members into a device for delivery (100) according to any of the preceding claims so that a first end of each delivery member is contained in a second pressure chamber (110) of the device for delivery and a second end of each delivery member is contained in a first pressure chamber (108) of the device for delivery;
positioning a receiving plate in the first chamber relative to the second ends of the delivery members; and
creating a pressure differential between the first and second pressure chambers so that the delivery members deliver liquid onto the receiving plate.

20. A method according to claim 19, wherein the pressure creating step includes lowering the pressure in the first pressure chamber.

21. A method according to claim 20, wherein lowering the pressure in the first pressure chamber includes increasing the volume of the first pressure chamber.

22. A method according to claim 21, wherein the volume is increased by moving a movable member.

23. A method according to any one of claims 19-22, further comprising the step of sealing the second pressure chamber from the first pressure chamber.

24. A method according to claim 23, wherein the sealing step includes positioning a holder (117) of the plurality of liquid delivery members between the first pressure chamber and the second pressure chamber.

25. A method according to any one of claims 19-24, wherein the second pressure chamber is exposed to the environment, and further comprising the step of sealing the first. pressure chamber from the environment prior to the pressure differential creating step.

26. A method according to any one of claims 19-25, further comprising, subsequent to the pressure differential creating step, the step of equalizing pressures within the first and second pressure chambers.

27. A method according to claim 26, further comprising the steps of:
removing the receiving plate from the first chamber; and
repeating the receiving plate positioning step, the pressure differential creating step, and the pressure equalizing step to deliver liquid onto a subsequent receiving plate.

28. A method according to any one of claims 19-27, wherein each of the plurality of delivery members is a capillary tube having open ends.

29. Use of a device according to any one of claims 1-18 in combinatorial chemistry.

30. Use according to claim 29, wherein the device delivers more than 96 different liquids simultaneously.

31. Use according to claim 29 or 30, wherein the device delivers between 108 and 9600 different liquids simultaneously.

32. Use according to any one of claims 29-31, wherein each liquid is a chemical reagent, such that by sequential addition of reagents an array of chemical compounds is prepared.

33. A method according to any one of claims 19-28 **characterised in that** it is carried out in combinatorial chemistry.

34. The method according to claim 33, wherein more than 96 different liquids are delivered simultaneously.

35. The method according to claim 33 or 34, wherein between 108 and 9600 different liquids are delivered simultaneously.

36. The method according to any one of claims 33-35, wherein each liquid is a chemical reagent, such that by sequential addition of reagents an array of chemical compounds is prepared.

37. Use of a device according to any one of claims 1-18 in DNA chip technology.

38. A method according to any one of claims 19-28 **characterised in that** it is carried out in DNA chip technology.

39. A device according to claim 1 further comprising a liquid delivery assembly , said liquid delivery assembly comprising:
a holder (117) configured for being mounted to the housing; and
a plurality of liquid delivery members (114) configured for containing and for delivering a liquid.

40. The device of claim 39 wherein the liquid delivery assembly further comprises a liquid storage capability.

41. The device of claim 39 wherein in the liquid delivery assembly, the liquid delivery members provide the liquid storage capability (131).

42. The device of claim 39 wherein in the liquid delivery assembly, the plurality of liquid delivery members are arranged in a grid pattern.

43. The device of claim 39 wherein in the liquid delivery assembly, the liquid delivery members are adaptably mounted to the holder.

44. The device of claim 43 wherein in the liquid delivery assembly, a material is provided for adaptably mounting the liquid delivery members to the holder such that the liquid delivery members have the capability of longitudinal movement.

## Revendications

1. Dispositif (100) pour la distribution de liquide, comprenant :
- un logement (102, 104, 106) comprenant une pluralité d'éléments amovibles de distribution de liquide comprenant un liquide, et comprenant un élément récepteur amovible dans une position de réception pour recevoir le liquide d'une pluralité d'éléments de distribution,
le logement définissant une première chambre de pression (108) et une deuxième chambre de pression (110), la première chambre de pression capable d'être séparée par le liquide relativement à la deuxième chambre de pression ; et
- un générateur de pression différentielle (126, 127, 129) connecté en fonctionnement à une de la première et de la deuxième chambres de pression, le générateur étant capable de générer un différentiel de pression entre la première et la deuxième chambres de pression pour faire que la pluralité d'éléments de distribution de liquide distribue le liquide sur l'élément de réception ;
**caractérisé en ce que** le générateur de pression différentielle (126, 127, 129) comprend une chambre amovible capable de modifier un volume dans une de la première et de la deuxième chambres de pression pour modifier une pression dans une de la première et de la deuxième chambres de pression.

2. Dispositif selon la revendication 1, dans lequel la pluralité d'éléments de distribution de liquide est montée dans un support (117) et le logement comprend le support dans une position de distribution et l'élément de réception dans une position de réception de telle façon que la génération du différentiel de pression fait que la pluralité d'éléments de distribution de liquide distribue le liquide sur l'élément de réception.

3. Dispositif selon la revendication 1 ou 2, dans lequel la deuxième chambre de pression est en communication fluidique avec l'environnement ambiant.

4. Dispositif selon l'une quelconque des revendications précédentes, dans lequel la première chambre de pression est capable d'être sélectivement rendue étanche par rapport à l'environnement ambiant.

5. Dispositif selon la revendication 4, dans lequel la première chambre de pression est sélectivement rendue étanche par rapport à l'environnement ambiant au moyen d'un obturateur.

6. Dispositif selon la revendication 5, dans lequel l'obturateur comprend une soupape (112) en communication fluidique avec la première chambre de pression.

7. Dispositif selon l'une quelconque des revendications précédentes, dans lequel le logement comprend une première extrémité de chaque élément de la pluralité d'éléments de distribution de liquide dans la deuxième chambre de pression et une deuxième extrémité de chaque élément de la pluralité d'éléments de distribution de liquide et de l'élément de réception dans la première chambre de pression.

8. Dispositif selon l'une quelconque des revendications précédentes, dans lequel le générateur de pression différentielle est en communication avec la première chambre de pression et est capable de créer une pression dans la première chambre de pression qui est inférieure à la pression dans la deuxième chambre de pression.

9. Dispositif selon l'une quelconque des revendications précédentes, dans lequel l'élément amovible rend la première chambre de pression étanche par rapport à l'environnement ambiant.

10. Dispositif selon l'une quelconque des revendications précédentes, dans lequel l'élément mobile comprend un élément flexible (126).

11. Dispositif selon la revendication 10, dans lequel l'élément flexible est disposé entre une paire de plaques amovibles.

12. Dispositif selon l'une quelconque des revendications précédentes, comprenant en outre un support (116) s'étendant à partir de la surface inférieure du dessus du logement (102) et capable de supporter une pluralité d'éléments de réception.

13. Dispositif selon la revendication 12, dans lequel le support est mobile par rapport au logement pour positionner un élément de réception sur le logement.

14. Dispositif selon la revendication 12 ou 13, dans lequel le support est mobile par rapport au logement pour positionner séquentiellement les éléments de réception dans le logement, un élément de réception à la fois.

15. Dispositif selon l'une quelconque des revendications précédentes, dans lequel la première chambre de pression est configurée pour contenir l'élément de réception, et comprend en outre un dispositif de positionnement dans la première chambre de pression capable de positionner l'élément de réception en position de réception.

16. Dispositif selon la revendication 15, dans lequel le dispositif de positionnement comprend un élément mobile ayant une extrémité capable de saisir l'élément de réception.

17. Dispositif selon l'une quelconque des revendications précédentes, dans lequel chaque élément de la pluralité d'éléments de distribution de liquide est un tube capillaire (114).

18. Dispositif selon la revendication 17, dans lequel chacun des tubes capillaires comprend une partie de stockage de liquide pour fournir la capacité de distributions multiples de liquide.

19. Procédé de distribution de liquide à partir d'une pluralité d'éléments de distribution de liquide sur une plaque de réception, le procédé comprenant les étapes de :
positionnement d'une pluralité d'éléments de distribution de liquide dans un dispositif pour la distribution (100) selon l'une quelconque des revendications précédentes de telle façon qu'une première extrémité de chaque élément de distribution est contenue dans une deuxième chambre de pression (110) du dispositif pour la distribution et une deuxième extrémité de chaque élément de distribution est contenue dans une première chambre de pression (108) du dispositif pour la distribution ;
positionnement d'une plaque de réception dans la première chambre relativement aux deuxièmes extrémités des éléments de distribution ; et
création d'un différentiel de pression entre la première et la deuxième chambres de pression de telle façon que l'élément de distribution distribue le liquide sur la plaque de réception.

20. Procédé selon la revendication 19, dans lequel l'étape de création de pression comprend l'abaissement de la pression dans la première chambre de pression.

21. Procédé selon la revendication 20, dans lequel l'abaissement de la pression dans la chambre de pression comprend l'augmentation du volume de la première chambre de pression.

22. Procédé selon la revendication 21, dans lequel le volume est augmenté en déplaçant un élément mobile.

23. Procédé selon l'une quelconque des revendications 19-22, comprenant en outre l'étape consistant à rendre étanche la deuxième chambre de pression par rapport à la première chambre de pression.

24. Procédé selon la revendication 23, dans lequel l'étape consistant à rendre étanche comprend le positionnement d'un support (117) de la pluralité d'éléments de distribution de liquide entre la première chambre de pression et la deuxième chambre de pression.

25. Procédé selon l'une quelconque des revendications 19-24, dans lequel la deuxième chambre de pression est exposée à l'environnement, et comprenant en outre l'étape consistant à rendre étanche la première chambre de pression par rapport à l'environnement avant l'étape de création d'un différentiel de pression.

26. Procédé selon l'une quelconque des revendications 19-25, comprenant en outre, subséquemment à l'étape de création du différentiel de pression, l'étape d'égalisation des pressions dans la première et la deuxième chambres de pression.

27. Procédé selon la revendication 26, comprenant en outre les étapes de :
retrait de la plaque de réception de la première chambre ; et
répétition de l'étape de positionnement de la plaque de réception, de l'étape de création du différentiel de pression, et de l'étape d'égalisation des pressions pour distribuer le liquide sur une plaque de réception subséquente.

28. Procédé selon l'une quelconque des revendications 19-27, dans lequel chaque élément de la pluralité d'éléments de distribution est un tube capillaire ayant des extrémités ouvertes.

29. Utilisation d'un dispositif selon l'une quelconque des revendications 1-18 en chimie combinatoire.

30. Utilisation selon la revendication 29, dans laquelle le dispositif distribue plus de 96 liquides différents simultanément.

31. Utilisation selon la revendication 29 ou 30, dans laquelle le dispositif distribue entre 108 et 9600 liquides différents simultanément.

32. Utilisation selon l'une quelconque des revendications 29-31, dans laquelle chaque liquide est un agent réactif chimique, de telle façon que par l'addition séquentielle d'agents réactifs on peut préparer une matrice (« array ») de composés chimiques.

33. Procédé selon l'une quelconque des revendications 19-28, **caractérisé en ce qu'**il est appliqué en chimie combinatoire.

34. Procédé selon la revendication 33, dans lequel plus de 96 liquides différents sont distribués simultanément.

35. Procédé selon la revendication 33 ou 34, dans lequel entre 108 et 9600 liquides différents sont distribués simultanément.

36. Procédé selon l'une quelconque des revendications 33-35, dans lequel chaque liquide est un agent réactif chimique, de telle façon que par l'addition séquentielle d'agents réactifs on peut préparer une matrice (« array ») de composés chimiques.

37. Utilisation d'un dispositif selon l'une quelconque des revendications 1-18 dans la technologie des puces à ADN.

38. Procédé selon l'une quelconque des revendications 19-28, **caractérisé en ce qu'**il est appliqué dans la technologie des puces à ADN.

39. Dispositif selon la revendication 1 comprenant en outre un ensemble de distribution de liquide, ledit ensemble de distribution de liquide comprenant :
un support (117) configuré pour être monté sur le logement ; et
une pluralité d'éléments de distribution de liquide (114) configurée pour contenir et pour distribuer un liquide.

40. Dispositif selon la revendication 39, dans lequel l'ensemble de distribution de liquide comprend en outre une capacité de stockage de liquide.

41. Dispositif selon la revendication 39, dans lequel dans l'ensemble de distribution de liquide, les éléments de distribution de liquide fournissent la capacité de stockage de liquide (131).

42. Dispositif selon la revendication 39, dans lequel dans l'ensemble de distribution de liquide, la pluralité d'éléments de distribution de liquide est agencée selon un dessin en forme de grille.

43. Dispositif selon la revendication 39, dans lequel dans l'ensemble de distribution de liquide, les éléments de distribution de liquide sont montés de façon adaptative sur le support.

44. Dispositif selon la revendication 43, dans lequel dans l'ensemble de distribution de liquide, un matériau est prévu pour monter de façon adaptative les éléments de distribution de liquide sur le support de telle façon que les éléments de distribution de liquide ont une capacité de mouvement longitudinal.

## Patentansprüche

1. Vorrichtung (100) zur Abgabe von Flüssigkeit, die Folgendes umfasst:
- ein Gehäuse (102, 104, 106) mit mehreren entfernbaren Flüssigkeitsabgabegliedern, die eine Flüssigkeit enthalten, und mit einem entfernbaren Aufnahmeglied in einer Aufnahmeposition zur Aufnahme der Flüssigkeit von den mehreren Flüssigkeitsabgabegliedern, wobei das Gehäuse eine erste Druckkammer (108) und eine zweite Druckkammer (110) begrenzt, wobei die erste Druckkammer bezüglich der zweiten Druckkammer durch die Flüssigkeit getrennt werden kann, und
- einen Differenzdruckerzeuger (126, 127, 129), der mit der ersten oder der zweiten Druckkammer wirkverbunden ist, wobei der Erzeuger eine Druckdifferenz zwischen der ersten und der zweiten Druckkammer erzeugen kann, um zu bewirken, dass die mehreren Flüssigkeitsabgabeglieder Flüssigkeit auf das Aufnahmeglied abgeben;
**dadurch gekennzeichnet, dass** der Differenzdruckerzeuger (126, 127, 129) ein bewegliches Glied enthält, das ein Volumen der ersten oder der zweiten Druckkammer ändern kann, um einen Druck in der ersten oder der zweiten Druckkammer zu ändern.

2. Vorrichtung nach Anspruch 1, bei der die mehreren Flüssigkeitsabgabeglieder in einem Halter (117) montiert sind und das Gehäuse den Halter in einer Abgabeposition und das Aufnahmeglied in einer Aufnahmeposition umfasst, so dass die Erzeugung der Druckdifferenz bewirkt, dass die mehreren Flüssigkeitsabgabeglieder Flüssigkeit auf das Aufnahmeglied abgeben.

3. Vorrichtung nach Anspruch 1 oder 2, bei der die zweite Druckkammer mit der umliegenden Umgebung in Strömungsverbindung steht.

4. Vorrichtung nach einem der vorhergehenden Ansprüche, bei der die erste Druckkammer gegen die umliegende Umgebung gezielt abgedichtet werden kann.

5. Vorrichtung nach Anspruch 4, bei der die erste Druckkammer mittels eines Stopfens gegen die umliegende Umgebung gezielt abgedichtet werden kann.

6. Vorrichtung nach Anspruch 5, bei der der Stopfen ein Ventil (112) enthält, das mit der ersten Druckkammer in Strömungsverbindung steht.

7. Vorrichtung nach einem der vorhergehenden Ansprüche, bei der das Gehäuse ein erstes Ende jedes der mehreren Flüssigkeitsabgabeglieder in der zweiten Druckkammer und ein zweites Ende jedes der mehreren Flüssigkeitsabgabeglieder und das Aufnahmeglied in der ersten Druckkammer aufweist.

8. Vorrichtung nach einem der vorhergehenden Ansprüche, bei der der Differenzdruckerzeuger mit der ersten Druckkammer in Strömungsverbindung steht und einen Druck in der ersten Kammer erzeugen kann, der niedriger ist als der Druck in der zweiten Druckkammer.

9. Vorrichtung nach einem der vorhergehenden Ansprüche, bei der das bewegliche Glied die erste Druckkammer gegen die umliegende Umgebung abdichtet.

10. Vorrichtung nach einem der vorhergehenden Ansprüche, bei der das bewegliche Glied ein flexibles Glied (126) enthält.

11. Vorrichtung nach Anspruch 10, bei der das flexible Glied zwischen einem Paar beweglicher Platten angeordnet ist.

12. Vorrichtung nach einem der vorhergehenden Ansprüche, weiterhin mit einer Stütze (116), die sich von der Unterseite des Gehäuseoberteils (102) erstreckt und mehrere Aufnahmeglieder stützen kann.

13. Vorrichtung nach Anspruch 12, bei der die Stütze bezüglich des Gehäuses beweglich ist, um ein Aufnahmeglied im Gehäuse zu positionieren.

14. Vorrichtung nach Anspruch 12 oder 13, bei der die Stütze bezüglich des Gehäuses beweglich ist, um Aufnahmeglieder im Gehäuse jeweils einzeln sequentiell zu positionieren.

15. Vorrichtung nach einem der vorhergehenden Ansprüche, bei der die erste Druckkammer so konfiguriert ist, dass sie das Aufnahmeglied enthält, und weiterhin mit einer Positioniervorrichtung in der ersten Druckkammer, die das Aufnahmeglied in der Aufnahmeposition positionieren kann.

16. Vorrichtung nach Anspruch 15, bei der die Positioniervorrichtung ein bewegliches Element mit einem Ende enthält, das das Aufnahmeglied ergreifen kann.

17. Vorrichtung nach einem der vorhergehenden Ansprüche, bei der jedes der mehreren Flüssigkeitsabgabeglieder ein Kapillarrohr (114) ist.

18. Vorrichtung nach Anspruch 17, bei der jedes der Kapillarrohre einen Flüssigkeitslagerungsteil zur Bereitstellung der Fähigkeit von Mehrfachflüssigkeitsabgaben enthält.

19. Verfahren zur Abgabe von Flüssigkeit aus mehreren Flüssigkeitsabgabegliedern auf eine Aufnahmeplatte, wobei das Verfahren die folgenden Schritte umfasst:
Positionieren mehrerer Flüssigkeitsabgabeglieder in eine Abgabevorrichtung (100) nach einem der vorhergehenden Ansprüche derart, dass ein erstes Ende jedes Abgabeglieds in einer zweiten Druckkammer (110) der Abgabevorrichtung und ein zweites Ende jedes Aufnahmeglieds in einer ersten Druckkammer (108) der Abgabevorrichtung enthalten ist;
Positionieren einer Aufnahmeplatte in der ersten Kammer bezüglich der zweiten Enden der Abgabeglieder; und
Erzeugen einer Druckdifferenz zwischen der ersten und der zweiten Druckkammer, so dass die Abgabeglieder Flüssigkeit auf die Aufnahmeplatte abgeben.

20. Verfahren nach Anspruch 19, bei dem der Druckerzeugungsschritt das Absenken des Drucks in der ersten Druckkammer umfasst.

21. Verfahren nach Anspruch 20, bei dem das Absenken des Drucks in der ersten Druckkammer das Erhöhen des Volumens der ersten Druckkammer umfasst.

22. Verfahren nach Anspruch 21, bei dem das Volumen durch Bewegen eines beweglichen Glieds erhöht wird.

23. Verfahren nach einem der Ansprüche 19 - 22, weiterhin mit dem Schritt des Abdichtens der zweiten Druckkammer gegen die erste Druckkammer.

24. Verfahren nach Anspruch 23, bei dem der Abdichtungsschritt das Positionieren eines Halters (117) der mehreren Flüssigkeitsabgabeglieder zwischen der ersten Druckkammer und der zweiten Druckkammer umfasst.

25. Verfahren nach einem der Ansprüche 19 - 24, bei dem die zweite Druckkammer zur Umgebung freiliegt, und weiterhin mit dem Schritt des Abdichtens der ersten Druckkammer gegen die Umgebung vor dem Druckdifferenzerzeugungsschritt.

26. Verfahren nach einem der Ansprüche 19 - 25, weiterhin mit dem Schritt des Ausgleichens von Drücken in der ersten und der zweiten Druckkammer nach dem Druckdifferenzerzeugungsschritt.

27. Verfahren nach Anspruch 26, weiterhin mit dem Schritt des:
Entfernens der Aufnahmeplatte von der ersten Kammer; und
Wiederholen des Aufnahmeplattenpositionierschritts, des Druckdifferenzerzeugungsschritts und des Druckausgleichsschritts zur Abgabe von Flüssigkeit auf eine nachfolgende Aufnahmeplatte.

28. Verfahren nach einem der Ansprüche 19 - 27, bei der jedes der mehreren Abgabeglieder ein Kapillarrohr mit offenen Enden ist.

29. Verwendung einer Vorrichtung nach einem der Ansprüche 1 - 18 in kombinatorischer Chemie.

30. Verwendung nach Anspruch 29, bei der die Vorrichtung mehr als 96 verschiedene Flüssigkeiten gleichzeitig abgibt.

31. Verwendung nach Anspruch 29 oder 30, bei der die Vorrichtung zwischen 108 und 9600 verschiedene Flüssigkeiten gleichzeitig abgibt.

32. Verwendung nach einem der Ansprüche 29 - 31, bei der jede Flüssigkeit ein chemisches Reagenz ist, so das durch sequentielle Addition von Reagenzien ein Array von chemischen Verbindungen hergestellt wird.

33. Verfahren nach einem der Ansprüche 19 - 28, **dadurch gekennzeichnet, dass** es in kombinatorischer Chemie durchgeführt wird.

34. Verfahren nach Anspruch 33, bei dem mehr als 96 verschiedene Flüssigkeiten gleichzeitig abgegeben werden.

35. Verwendung nach Anspruch 33 oder 34, bei dem zwischen 108 und 9600 verschiedene Flüssigkeiten gleichzeitig abgegeben werden.

36. Verwendung nach einem der Ansprüche 33 - 35, bei der jede Flüssigkeit ein chemisches Reagenz ist, so dass durch sequentielle Addition von Reagenzien ein Array von chemischen Verbindungen hergestellt wird.

37. Verwendung einer Vorrichtung nach einem der Ansprüche 1 - 18 in DNA-Chip-Technologie

38. Verfahren nach einem der Ansprüche 19 - 28, **dadurch gekennzeichnet, dass** es in DNA-Chip-Technologie durchgeführt wird.

39. Vorrichtung nach Anspruch 1, weiterhin mit einer Flüssigkeitsabgabeanordnung, welche Folgendes umfasst:
einen Halter (117), der zur Montage an das Gehäuse konfiguriert ist; und
mehrere Flüssigkeitsabgabeglieder (114), die zur Aufnahme und zur Abgabe einer Flüssigkeit konfiguriert sind.

40. Vorrichtung nach Anspruch 39, bei der die Flüssigkeitsabgabeanordnung weiterhin eine Flüssigkeitslagerungsfähigkeit umfasst.

41. Vorrichtung nach Anspruch 39, bei der in der Flüssigkeitsabgabeanordnung die Flüssigkeitsabgabeglieder die Flüssigkeitslagerungsfähigkeit (31) bereitstellen.

42. Vorrichtung nach Anspruch 39, bei der in der Flüssigkeitsabgabeanordnung die mehreren Flüssigkeitsabgabeglieder in einem Gittermuster angeordnet sind.

43. Vorrichtung nach Anspruch 39, bei der in der Flüssigkeitsabgabeanordnung die Flüssigkeitsabgabeglieder anpassbar am Halter montiert sind.

44. Vorrichtung nach Anspruch 43, bei der in der Flüssigkeitsabgabeanordnung ein Material zur derartigen anpassbaren Montage der Flüssigkeitsabgabeglieder an den Halter vorgesehen wird, dass die Flüssigkeitsabgabeglieder eine Längsbewegung ausführen können.
